(19) Europäisches Patentamt
European Patent Office
Office européen des brevets

(11) EP 4 052 829 B1

(12) **EUROPEAN PATENT SPECIFICATION**

(45) Date of publication and mention of the grant of the patent:
**01.05.2024 Bulletin 2024/18**

(21) Application number: **22160453.1**

(22) Date of filing: **07.08.2018**

(51) International Patent Classification (IPC):
***B23K 3/047*** (2006.01) ***B23K 1/00*** (2006.01)
***B23K 3/03*** (2006.01) *B23K 101/36* (2006.01)

(52) Cooperative Patent Classification (CPC):
**B23K 3/0478; B23K 1/0016; B23K 3/033;**
**G06F 13/4282;** B23K 2101/36

(54) **SOLDERING IRON CONTROL DEVICE, CARTRIDGE, AND SOLDERING IRON MANAGEMENT SYSTEM**

LÖTKOLBENSTEUERUNGSVORRICHTUNG, PATRONE UND LÖTKOLBENVERWALTUNGSSYSTEM

DISPOSITIF DE COMMANDE DE FER À SOUDER, CARTOUCHE ET SYSTÈME DE GESTION DE FER À SOUDER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2017 US 201762543797 P**
**11.07.2018 JP 2018131639**

(43) Date of publication of application:
**07.09.2022 Bulletin 2022/36**

(62) Document number(s) of the earlier application(s) in accordance with Art. 76 EPC:
**18843223.1 / 3 666 439**

(73) Proprietor: **Hakko Corporation**
**Osaka-shi, Osaka 556-0024 (JP)**

(72) Inventors:
- **MATSUZAKI, Kenji**
**Naniwa-ku, Osaka-shi 556-0024 (JP)**
- **NAKAMURA, Kenta**
**Naniwa-ku, Osaka-shi 556-0024 (JP)**
- **TAKEUCHI, Hitoshi**
**Naniwa-ku, Osaka-shi 556-0024 (JP)**

(74) Representative: **Müller-Boré & Partner Patentanwälte PartG mbB**
**Friedenheimer Brücke 21**
**80639 München (DE)**

(56) References cited:
**EP-A1- 3 115 142 US-B1- 6 580 050**

EP 4 052 829 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a combination of a soldering iron, a control device that allows electrical connection to the soldering iron and controls the temperature of a tip, and a temperature measuring device, and to a soldering iron management system including this combination.

### Background Art

In the electronics industry the task of soldering electronic components is often a manual operation. The soldering function is performed by setting the work area on a work bench. The worker will operate the soldering device facing the work area. The soldering devices may include soldering irons, de-soldering irons, and tweezers but they are not limited thereto. The individual soldering device is connected to a power supply control device. The power supply control device controls the heat generation of the soldering device by adjusting the power applied to the soldering device. Conventional power supply control devices include a power supply portion supplying power to the soldering device, a power supply control portion controlling the power output from the power supply portion, a temperature setting portion for inputting a set temperature which is the control target of the power supply control section, a display for displaying the setting information of the temperature setting portion, and a housing for housing or enclosing the circuitry. The worker or operator operates the temperature setting portion while viewing the information displayed on the display. This operation includes a process to update or set the setting information to the temperature setting portion. The setting information is information related to conditions for determining the set temperature of the soldering device as well as the physical characteristics of the work to be soldered. In industrial applications, the same set of soldering functions may be carried out by the operator, and the supervisors may impose conditions on the soldering operations to promote efficiency and uniformity. For example, the supervisor may set a maximum operating temperature for the power supply control device to prevent overheating of the work during the soldering operations.

There are following requirements about a soldering iron control device and a cartridge. When a soldering iron control device having a setting to use leaded solder and a setting to use lead-free solder is used, it is required to prevent incorrect combination of the setting of the soldering iron control device and the cartridge. It is required to secure traceability of soldering. An indicator of cartridge life is required. It is required to secure traceability of the cartridge. It is required to prevent the soldering iron from causing a fire. It is required to cause the soldering iron control device to support Internet of Things (IoT).

US 6 580 050 B1 describes a soldering station with a control unit and a soldering iron having a replaceable soldering tip, the soldering iron being connected to the control unit by a power cord for receiving electrical power from said control unit is provided with an automatic calibration feature.

### Summary of Invention

An object of the present invention is to provide a combination of a soldering iron and a soldering iron control device, and a soldering iron management system that can meet these requirements.

A combination of a soldering iron, a soldering iron control device and a temperature measurement device according to the present invention is defined in claim 1.

A management system with such combination is defined in claim 6.

Preferred embodiments of the present invention are defined in the dependent claims.

### Brief Description of Drawings

FIG. 1 is a block diagram showing a configuration of a soldering iron management system according to an embodiment.

FIG. 2 is a block diagram showing an electric configuration of a soldering iron.

FIG. 3 is a block diagram showing an electric configuration of a temperature measurement device.

FIG. 4 is a functional block diagram of a soldering iron control device.

FIG. 5 is a functional block diagram of a first functional unit.

FIG. 6 is an explanatory diagram describing an example of the number of pulses supplied to a heater unit in accordance with control of a temperature control unit in an idling state and a load state.

FIG. 7 is a flowchart describing a measurement operation of a third amount of power.

FIG. 8 is a flowchart describing recording (updating) of applied load counts.

FIG. 9 is a functional block diagram of a second functional unit.

FIG. 10 is a flowchart describing a writing process of totaled powered time.

FIG. 11 is an explanatory diagram describing an exemplary region set in advance in a nonvolatile memory.

FIG. 12 is a functional block diagram of a third functional unit.

FIG. 13 is a flowchart describing a setting of either a first setting or a second setting.

FIG. 14 is a flowchart describing a process of setting dedication information in the nonvolatile memory included in a cartridge.

FIG. 15 is a flowchart describing a process of confirming whether a setting of the soldering iron control device and the cartridge are properly combined.

FIG. 16 is a functional block diagram of a fourth functional unit

FIG. 17 is a flowchart describing an automatic calibration routine.

FIG. 18A is first half of a flowchart describing an automatic temperature calibration routine.

FIG. 18B is second half of the flowchart describing the automatic temperature calibration routine.

FIG. 19 is a flowchart describing an automatic voltage calibration routine.

FIG. 20 is a flowchart describing an automatic resistance calibration routine.

FIG. 21 is a functional block diagram of a fifth functional unit

FIG. 22 is a flowchart describing a process of monitoring falling of the soldering iron.

## Description of Embodiment

An embodiment of the present invention will be described in detail below with reference to the drawings. In each of the drawings, a component with the same reference sign indicates the same component, and descriptions of the component already described will be omitted. Note that the following embodiment is one example of embodying the present invention, and does not have nature to limit the technical scope of the present invention.

FIG. 1 is a block diagram showing a configuration of a soldering iron management system 1000 according to the embodiment. The soldering iron management system 1000 includes a plurality of soldering iron control devices 100, a plurality of soldering irons 200, a plurality of temperature measurement devices 300, and a computer device 400.

Each of the soldering irons 200 includes a handle part 210 and a cartridge 220. The cartridge 220 can be attached to and detached from the handle part 210. A distal end of the cartridge 220 is a tip 221.

The use of the soldering iron 200 is not limited to soldering. The soldering iron 200 may be used to melt solder in order to de-solder with a de-soldering tool, or may be used to melt solder on an electronic component soldered to a substrate and to remove the electronic component from the substrate. The soldering iron 200 for the latter use is referred to as a hot tweezer.

Each of the temperature measurement devices 300 measures the temperature of the tip 221. The temperature measurement device 300 is used by an operator to manage the temperature of the tip 221. The number of temperature measurement devices 300 may be less than the number of soldering iron control devices 100. For example, the plurality of soldering iron control devices 100 may share one temperature measurement device 300.

Each of the soldering iron control devices 100 is connected to the handle part 210 by a cable CB. In this way, the soldering iron control device 100 is provided separately from the soldering iron 200 such that the soldering iron control device 100 can be electrically connected to the soldering iron 200. The soldering iron control device 100 has functions such as a function of controlling the temperature of the tip 221.

The computer device 400 is connected to the plurality of soldering iron control devices 100 by a network NW. The computer device 400 is, for example, a personal computer such as a desktop computer, a notebook computer, or a tablet computer, or a smartphone. The network NW is, for example, the Internet or an intranet. The computer device 400 has functions such as a function of collecting information stored in a nonvolatile memory 224 (FIG. 2) included in the cartridge 220.

FIG. 2 is a block diagram showing an electric configuration of the soldering iron 200. The cartridge 220 includes the tip 221, a heater unit 222, a temperature sensor 223, and the nonvolatile memory 224.

The heater unit 222 heats the tip 221. A scheme of the heater unit 222 may be, for example, a scheme to heat the tip 221 with a heating element (nichrome wire, ceramics, or the like) (resistance heating scheme), or a scheme to cause the tip 221 to generate heat (high-frequency induction heating scheme).

The temperature sensor 223 is a sensor that is disposed near the tip 221 and used to measure the temperature of the tip 221. The temperature sensor 223 is, for example, a thermocouple. In order to manage the temperature of the tip 221 measured using the temperature sensor 223, the temperature measurement device 300 is used.

The nonvolatile memory 224 can repeatedly write information, and stores predetermined information such as an ID of the cartridge 220 (hereinafter referred to as cartridge information CI). Details of the cartridge information CI will be described later. The nonvolatile memory 224 is, for example, an electrically erasable programmable read-only memory (EEPROM).

The handle part 210 includes a microcomputer 211 and an acceleration sensor 212. The microcomputer 211 has, for example, a function of reading the cartridge information CI stored in the nonvolatile memory 224 from the nonvolatile memory 224 and transmitting the cartridge information CI to the soldering iron control device 100 in accordance with instructions from the soldering iron control device 100, and a function of writing the cartridge information CI into the nonvolatile memory 224 in accordance with instructions from the soldering iron control device 100.

The acceleration sensor 212 measures acceleration generated in the soldering iron 200. The acceleration sensor 212 is used, for example, to detect falling of the soldering iron 200. The acceleration sensor 212 may be, for example, a capacitance detection scheme or a piezoresistive scheme.

The handle part 210 and the soldering iron control device 100 are connected by the cable CB. The cable CB includes a power line that supplies power to the heater unit 222, a signal line that transmits an output signal of the temperature sensor 223, and a communication line used for communication with the microcomputer 211. If power-line carrier communication is used, the signal line and the communication line become unnecessary.

FIG. 3 is a block diagram showing an electric configuration of the temperature measurement device 300. The temperature measurement device 300 includes a temperature sensor 301, a voltage measurement circuit 302, a resistance measurement circuit 303, and a microcomputer 304. In addition to the function of measuring the temperature of the tip 221, the temperature measurement device 300 has a function of measuring a leak voltage and a function of measuring a resistance between the tip 221 and the earth.

The temperature sensor 301 is, for example, a thermocouple, and is used to measure the temperature of the tip 221.

The voltage measurement circuit 302 is used to measure the leak voltage. The leak voltage is a voltage generated by a leak current leaking from the tip 221 (FIG. 1) to a workpiece (substrate, electronic component). The leak voltage specifically indicates the level of the leak current Since the leak current adversely affects electronic components, management of the leak voltage is important.

The resistance measurement circuit 303 is used to measure the resistance between the tip 221 and the earth. Most of the leak current flows from the tip 221 through an earth line to an earth terminal of a wall outlet. This can prevent adverse effects on the device. Therefore, management of the resistance between the tip 221 and the earth is important.

FIG. 4 is a functional block diagram of the soldering iron control device 100. The soldering iron control device 100 includes a control processing unit 101, a communication unit 102, a temperature control unit 103, a voltage measurement unit 104, a current measurement unit 105, an input unit 106, a display control unit 107, a display unit 108, a first functional unit 109, a second functional unit 110, a third functional unit 111, a fourth functional unit 112, and a fifth functional unit 113.

The control processing unit 101 is implemented by, for example, a hardware processor such as a central processing unit (CPU), a random access memory (RAM), a read only memory (ROM), and a hard disk drive (HDD), and a program, data, or the like for executing functions of the control processing unit 101. The above description can be applied to the temperature control unit 103, the display control unit 107, and the first functional unit 109 to the fifth functional unit 113.

The communication unit 102 has a function of communicating with the microcomputer 211 (FIG. 2) included in the handle part 210. In more detail, the communication unit 102 includes, for example, a universal asynchronous receiver transmitter (UART) in order to perform serial communication with the microcomputer 211. Wired communication is taken as an example, but wireless communication may be used (for example, infrared communication such as the infrared data association (IrDA) standard, and Bluetooth (registered trademark)).

The communication unit 102 has a function of communicating with the network NW. In more detail, the communication unit 102 includes, for example, an interface for industrial Ethernet (Ethernet is a registered trademark). Wired communication is taken as an example, but wireless communication may be used (for example, wireless LAN).

The communication unit 102 has a function of communicating with the temperature measurement device 300. In more detail, the communication unit 102 includes, for example, the UART in order to perform serial communication with the microcomputer 304 of the temperature measurement device 300. Wired communication is taken as an example, but wireless communication may be used (for example, infrared communication such as the IrDA standard, and Bluetooth (registered trademark)).

The voltage measurement unit 104 is a circuit that measures a voltage applied to the heater unit 222. The current measurement unit 105 is a circuit that measures a current supplied to the heater unit 222.

With reference to FIG. 4, the voltage measurement unit 104 and the current measurement unit 105 are each connected to a power line that supplies power to the heater unit 222 (this power line is included in the cable CB). The current measurement unit 105 is connected in series between an earth terminal of the heater unit 222 and the earth. The voltage measurement unit 104 is connected in series between a power source terminal of the heater unit 222 and the earth.

The temperature control unit 103 controls the temperature of the heater unit 222 by feedback control, thereby setting the temperature of the tip 221 at a set temperature. In more detail, based on the temperature indicated by the temperature sensor 223 included in the cartridge 220, the voltage measured by the voltage measurement unit 104, and the current measured by the current measurement unit 105, the temperature control unit 103 performs control to calculate an amount of power for setting the temperature indicated by the temperature sensor 223 at the set temperature and to provide the amount of power to the heater unit 222.

The control of the amount of power will be described in detail. The temperature control unit 103 performs full-wave rectification on alternating current from an external AC power source, and adjusts the number of pulses to be supplied to the heater unit 222 from among pulses obtained by the full-wave rectification, thereby controlling the power to be supplied to the heater unit 222. It is assumed that the time required to generate the predetermined number of pulses is one cycle. For example, it is assumed that the predetermined number is 21 pulses. For 60 Hz alternating current, if alternating current undergoes full-wave rectification, 120 pulses are generated per second. The time required to generate one pulse is 0.00833 ... seconds. Therefore, the time required to generate 21 pulses (1 cycle) is 0.175 seconds (= 21 $\times$ 0.00833...).

For 50 Hz alternating current, if alternating current undergoes full-wave rectification, 100 pulses are generated per second. The time required to generate one pulse is 0.01 seconds. Therefore, the time required to generate 21 pulses (1 cycle) is 0.21 seconds (= 21 $\times$ 0.01).

The control of the amount of power is not limited to the above scheme, but may be another scheme (for example, pulse width modulation (PWM) control).

The input unit 106 is a device for the operator to make various inputs to the soldering iron control device 100. Specific examples of various inputs will be described. The operator operates the input unit 106 to input the set temperature to the soldering iron control device 100. The operator operates the input unit 106 and inputs an instruction to read and write the cartridge information CI stored in the nonvolatile memory 224 included in the cartridge 220. The input unit 106 is implemented by at least one of a hard key (button, switch, or the like) and a soft key (touch panel).

The display control unit 107 displays various data and information on the display unit 108. For example, the display control unit 107 causes the display unit 108 to display the set temperature or to display the cartridge information CI. The display unit 108 is, for example, a liquid crystal display or an organic EL display (organic light emitting diode display).

The soldering iron control device 100 includes the first functional unit 109 to the fifth functional unit 113. The first functional unit 109 will be described first The first functional unit 109 performs calculation of a thermal load, calculation of applied load counts, and the like. The thermal load and the applied load counts will be described later. FIG. 5 is a functional block diagram of the first functional unit 109. The first functional unit 109 includes an identification unit 109a, a storage unit 109b, a measurement unit 109c, a calculation unit 109d, and an instruction unit 109e.

The identification unit 109a identifies whether the tip 221 is in a load state. When the tip 221 comes into contact with a workpiece in order to solder the workpiece, the heat of the tip 221 is conducted to the workpiece and the solder, and the temperature of the tip 221 becomes lower than the set temperature. When the temperature of the tip 221 decreases by a predetermined amount or more (for example, 5 degrees) from the set temperature, this is referred to as a load state. In contrast, there is an idling state. The idling state is a state in which the tip 221 is noncontact (the tip 221 is not in contact with the workpiece) and the temperature of the tip 221 is maintained within a predetermined range including the set temperature. The temperature of the tip 221 being set at the set temperature means that the temperature of the tip 221 reaches the set temperature and is set in the idling state. Note that the workpiece means including at least one of an electronic component and a land of a substrate (portion to which the electronic component is soldered) to be soldered.

FIG. 6 is an explanatory diagram describing an example of the number of pulses to be supplied to the heater unit 222 in accordance with the control of the temperature control unit 103 in the idling state and the load state. It is assumed that 1 cycle is 0.175 seconds. In the idling state, the amount of power supplied to the heater unit 222 is relatively small (the amount of power supplied to the heater unit 222 differs depending on the room temperature). (a) of FIG. 6 is an example of the number of pulses to be supplied to the heater unit 222 in the idling state. In order to maintain the idling state, the temperature control unit 103 repeats, for example, a cycle to supply 8 pulses to the heater unit 222 and a cycle to supply 0 pulses to the heater unit 222 alternately.

The temperature control unit 103 performs control to make the amount of power to supply to the heater unit 222 larger in the load state than in the idling state to return to the idling state. The temperature control unit 103 increases the amount of power to supply to the heater unit 222 as the load state increases (as the difference between the temperature of the tip 221 and the set temperature increases). The temperature control unit 103 decreases the amount of power to supply to the heater unit 222 as the load state decreases (as the difference between the temperature of the tip 221 and the set temperature decreases).

For example, a description will be made using two load states as an example, (b) of FIG. 6 is an example of the number of pulses to be supplied to the heater unit 222 in a relatively small load state (the difference between the temperature of the tip 221 and the set temperature is relatively small). The temperature control unit 103 repeats a cycle to supply 8 pulses to the heater unit 222, for example, (c) of FIG. 6 is an example of the number of pulses to be supplied to the heater unit 222 in a relatively large load state (the difference between the temperature of the tip 221 and the set temperature is relatively large). The temperature control unit 103 repeats a cycle to supply 16 pulses to the heater unit 222, for example,

Note that in a state where 21 pulses are supplied to the heater unit 222 in 1 cycle, the amount of power of 1 cycle is measured, which is divided by 21 to obtain the amount of power of 1 pulse.

With reference to FIG. 5, the storage unit 109b is implemented by a flash memory, an HDD, or the like, and stores a first amount of power in advance. The first amount of power is an amount of power to be supplied to the soldering iron 200 in the idling state. The amount of power to be supplied to the soldering iron 200 is an amount of power to be supplied to the heater unit 222. The period (time) used for calculating the first amount of power is 1 cycle.

A method for measuring the first amount of power will be described in detail. With reference to FIGS. 4 and 6, in the idling state, by using the current measured by the current measurement unit 105 and the voltage measured by the voltage measurement unit 104, the measurement unit 109c (FIG. 5) calculates an amount of power e1 of 1 cycle by using the following formula.

$$e1 = I1 \times V1 \times S$$

I1 is a current measured by the current measurement unit 105 in the idling state. V1 is a voltage measured by the voltage measurement unit 104 in the idling state. S is 1 cycle.

In the idling state, in 1 cycle, not all 21 pulses are supplied to the heater unit 222, but a predetermined number N of (for example, 8) pulses is supplied to the heater unit 222. In the idling state, there is a cycle in which no pulse is supplied to the heater unit 222. Here, it is assumed that a cycle to supply pulses to the heater unit 222 and a cycle to supply no pulses are repeated alternately. The measurement unit 109c calculates a first amount of power E1 by using the following formula.

$$E1 = (N / 21 \times e1) / 2$$

The first amount of power E1 is measured in advance by the measurement unit 109c for each set temperature. The storage unit 109b stores in advance a table in which the first amount of power E1 is associated with each set temperature.

The measurement unit 109c measures a third amount of power obtained by subtracting the first amount of power from a second amount of power. The second amount of power is an amount of power to be supplied to the soldering iron 200 when the tip 221 is in the load state. The first amount of power is an amount of power to be supplied to the soldering iron 200 when the tip 221 is in the idling state. The third amount of power is an amount of power obtained by subtracting the first amount of power from the second amount of power. Therefore, in the load state, thermal energy generated by the third amount of power is applied to the workpiece and the solder (in more accurately, thermal energy obtained by subtracting thermal energy radiated from the workpiece and the solder into the air from the thermal energy generated by the third amount of power is applied). In other words, the third amount of power is a thermal load for the workpiece and the solder in the load state. Therefore, the first functional unit 109 can calculate the thermal loads for the workpiece and the solder.

Note that the amount of power (first amount of power, second amount of power, third amount of power) is electric energy, and the unit of the amount of power is Joule.

The time (period) used for calculating the second amount of power is 1 cycle. A method for measuring the second amount of power will be described in detail.

In the load state, by using the current measured by the current measurement unit 105 and the voltage measured by the voltage measurement unit 104, the measurement unit 109c calculates an amount of power e2 of 1 cycle by using the following formula.

$$e2 = I2 \times V2 \times S$$

12 is a current measured by the current measurement unit 105 in the load state. V2 is a voltage measured by the voltage measurement unit 104 in the load state. S is 1 cycle.

In the load state, in 1 cycle, not all 21 pulses are supplied to the heater unit 222, but a predetermined number N of (for example, 8, 16) pulses is supplied to the heater unit 222. The measurement unit 109c calculates a second amount of power E2 by using the following formula.

$$E2 = N / 21 \times e2$$

Until the load state is canceled, the measurement unit 109c repeatedly measures the second amount of power in units of 1 cycle (predetermined period), repeatedly calculates a value obtained by subtracting the first amount of power from the second amount of power in units of 1 cycle (predetermined period), and integrates this value. This integrated value is the third amount of power. Before the measurement of the third amount of power finishes, the display control unit 107 may cause the display unit 108 to display the integrated value. This allows the operator to determine the progress of the third amount of power.

For example, timing to return from the load state to the idling state may be defined as timing when the load state is canceled, or timing when the tip 221 is separated from the workpiece and the solder may be defined as timing when the load state is canceled. The timing when the tip 221 is separated from the workpiece and the solder refers to, for example, timing when the temperature of the tip 221 stops decreasing, the temperature of the tip 221 fluctuates little by little, and then the temperature starts to rise toward the set temperature.

The measurement unit 109c finishes the measurement of the third amount of power when the load state is canceled. The measurement unit 109c determines the integrated value at this time as the third amount of power.

The calculation unit 109d calculates the applied load counts. The applied load counts are a value obtained by accumulating the number of transitions from the load state to cancellation of the load state since the cartridge 220 is first used. The transition from the load state to cancellation of the load state is defined as one load to the tip 221. The applied load counts correlate with the degree of degradation of the tip 221. As the applied load counts increase, the degradation of the tip 221 progresses, and thus the applied load counts can be used as an indicator of lifetime of the cartridge 220.

The instruction unit 109e issues an instruction to write the applied load counts calculated by the calculation unit 109d in the nonvolatile memory 224 (FIG. 2) included in the cartridge 220. The applied load counts for the cartridge 220 can be stored in the nonvolatile memory 224 included in the cartridge 220. This can eliminate the need for the soldering iron control device 100 to manage the applied load counts for each cartridge 220.

A measurement operation of the third amount of power will be described. FIG. 7 is a flowchart describing the measurement operation of the third amount of power. With reference to FIGS. 2, 5 and 7, the temperature control unit 103 (FIG. 4) performs feedback control to set the temperature of the tip 221 at the set temperature. The measurement unit 109c reads the first amount of power associated with the set temperature of the feedback control from the storage unit 109b (step S1). The identification unit 109a determines in the feedback control state whether transition from the idling state to the load state has been made (step S2). When the identification unit 109a determines that the transition has not been made (No in step S2), the process of step S2 is repeated.

When the identification unit 109a determines that the transition from the idling state to the load state has been made (Yes in step S2), the measurement unit 109c starts measurement of the third amount of power (step S3).

The identification unit 109a determines whether transition from the load state to cancellation of the load state has been made (step S4). When the identification unit 109a determines that the transition has not been made (No in step S4), the identification unit 109a repeats the process of step S4. When the identification unit 109a determines that the transition has been made (Yes in step S4), the measurement unit 109c finishes measurement of the third amount of power (step S5). The measurement unit 109c determines the integrated value at this time as the third amount of power. The display control unit 107 (FIG. 4) causes the display unit 108 to display the determined third amount of power (step S6).

After step S6, the calculation unit 109d counts and stores 1 as the number n (number of loads) of transitions from the load state to cancellation of the load state (step S7). Every time the transition from the load state to cancellation of the load state is repeated, the number n of transitions increases by one.

Next, writing (updating) of the applied load counts will be described. FIG. 8 is a flowchart describing writing (updating) of the applied load counts. With reference to FIGS. 2, 5 and 8, at predetermined timing, the instruction unit 109e instructs the microcomputer 211 included in the handle part 210 to read the applied load counts stored in the nonvolatile memory 224 included in the cartridge 220. In accordance with this instruction, the communication unit 102 (FIG. 4) transmits the read instruction of the applied load counts to the microcomputer 211 (step S22).

The microcomputer 211 receives the read instruction of the applied load counts (step S23). The microcomputer 211 reads the applied load counts from the nonvolatile memory 224 and transmits the applied load counts to the communication unit 102 (step S24). The communication unit 102 receives the applied load counts read from the nonvolatile memory 224 (step S25).

The calculation unit 109d adds the number n counted in soldering this time (step S7 in FIG. 7) to the applied load counts read from the nonvolatile memory 224, and calculates new applied load counts (step S26). The instruction unit 109e instructs the microcomputer 211 to write the applied load counts (update instruction) in the nonvolatile memory 224. In accordance with this instruction, the communication unit 102 (FIG. 4) transmits the write instruction (update instruction) of the applied load counts and the new applied load counts to the microcomputer 211 (step S27).

The microcomputer 211 receives the write instruction (update instruction) and the new applied load counts (step S28). The microcomputer 211 writes the new applied load counts in the nonvolatile memory 224 (step S29). That is, the microcomputer 211 updates the applied load counts stored in the nonvolatile memory 224.

The second functional unit 110 will be described. The second functional unit 110 has functions such as a function of calculating totaled powered time. The totaled powered time indicates a value obtained by accumulating the time when power is supplied to the heater unit 222 (FIG. 2) included in the cartridge 220 since the cartridge 220 is first used. FIG. 9 is a functional block diagram of the second functional unit 110. The second functional unit 110 includes a measuring unit 110a, a calculation unit 110b, and an instruction unit 110c.

The measuring unit 110a measures the time when power is supplied to the heater unit 222 included in the cartridge 220. A detailed description will be provided. With reference to FIGS. 2, 4 and 9, in a state where the cartridge 220 is attached to the handle part 210, the operator inputs an instruction to start a soldering operation by using the input unit 106. With this instruction, the temperature control unit 103 starts supplying power to the heater unit 222 included in the cartridge 220, and the measuring unit 110a starts measurement of the powered time. The measuring unit 110a includes a timer for measuring the powered time. The measurement of the powered time may be performed in seconds or minutes. In the latter case, the measuring unit 110a activates a 60-second measurement timer and counts up by 1 minute every 60-second measurement.

By using the input unit 106, the operator inputs an instruction to finish the soldering operation with the cartridge 220 currently used. With this instruction, the temperature control unit 103 stops supplying power to the heater unit 222 included in the cartridge 220, and the measuring unit 110a finishes the measurement of the powered time. The powered time measured here is the powered time when the soldering operation is performed using the cartridge 220 this time.

The calculation unit 110b adds the powered time of this time to the totaled powered time read from the nonvolatile memory 224 included in the cartridge 220 to calculate new totaled powered time.

The instruction unit 110c issues an instruction to write the new totaled powered time in the nonvolatile memory 224 (update instruction of the totaled powered time).

FIG. 10 is a flowchart describing the writing process of the totaled powered time. With reference to FIGS. 2, 9, and 10, when finishing the soldering operation with the cartridge 220 currently used, the operator inputs an instruction to finish the soldering operation by using the input unit 106 (FIG. 4) (step S41). When this instruction is input, the instruction unit 110c instructs the microcomputer 211 included in the handle part 210 to read the totaled powered time stored in the nonvolatile memory 224 included in the cartridge 220. In accordance with this instruction, the communication unit 102 (FIG. 4) transmits the instruction to read the totaled powered time to the microcomputer 211 (step S42).

The microcomputer 211 receives the instruction to read the totaled powered time (step S43). The microcomputer 211 reads the totaled powered time from the nonvolatile memory 224 and transmits the totaled powered time to the communication unit 102 (step S44). The communication unit 102 receives the totaled powered time read from the nonvolatile memory 224 (step S45).

The calculation unit 110b adds the powered time measured by the measuring unit 110a in the soldering of this time to the totaled powered time read from the nonvolatile memory 224 to calculate new totaled powered time (step S46). The instruction unit 110c instructs the microcomputer 211 to write the totaled powered time (update instruction) in the nonvolatile memory 224. In accordance with this instruction, the communication unit 102 transmits the instruction to write the totaled powered time (update instruction) and the new totaled powered time to the microcomputer 211 (step S47).

The microcomputer 211 receives the write instruction (update instruction) and the new totaled powered time (step S48). The microcomputer 211 writes the new totaled powered time in the nonvolatile memory 224 (step S49). That is, the microcomputer 211 updates the totaled powered time stored in the nonvolatile memory 224.

The applied load counts and the totaled powered time described above are included in the cartridge information CI (FIG. 2). The cartridge information CI includes ID information, shape information, dedication information, the applied load counts, the totaled powered time, and the like. The ID information indicates the ID of the cartridge 220. The shape information indicates the shape of the tip 221 included in the cartridge 220. The dedication information indicates whether the cartridge 220 is dedicated to leaded solder or dedicated to lead-free solder.

The nonvolatile memory 224 included in the cartridge 220 stores the cartridge information CI regarding the cartridge 220. In the nonvolatile memory 224, a region for storing the cartridge information CI is set in advance. A detailed description will be provided. FIG. 11 is an explanatory diagram describing an exemplary region set in advance in the nonvolatile memory 224. The ID information is stored in a region 224a. The shape information is stored in a region 224b. The dedication information is stored in a region 224c. The applied load counts are stored in a region 224d. The totaled powered time is stored in a region 224e.

The soldering iron control device 100 supports IoT. With reference to FIGS. 1, 2, and 4, the soldering iron control device 100 can read the cartridge information CI from the nonvolatile memory 224 included in the cartridge 220, and transmit the cartridge information CI to the computer device 400 by using the network NW. The computer device 400 saves the transmitted cartridge information CI.

The third functional unit 111 will be described. The third functional unit 111 has functions such as a function of making a notification when the setting of the soldering iron control device 100 and the cartridge 220 are combined incorrectly.

If the cartridge 220 is used for leaded solder, the cartridge 220 cannot be used for lead-free solder any more. Therefore, the cartridge 220 is used by separating into the cartridge 220 dedicated to leaded solder and the cartridge 220 dedicated to lead-free solder.

As described above, the operator needs to properly combine the setting of the soldering iron control device 100 with the cartridge 220. FIG. 12 is a functional block diagram of the third functional unit 111. The third functional unit 111 includes a setting unit 111a, a request unit 111b, and a notification unit 111c.

The input unit 106 (FIG. 4) can make an input to select whether to use the soldering iron control device 100 for leaded solder or lead-free solder. When the input to use the soldering iron control device 100 for leaded solder is made by using the input unit 106, the setting unit 111a makes a first setting to use the soldering iron control device 100 for leaded solder. When the input to use the soldering iron control device 100 for lead-free solder is made by using the input unit 106, the setting unit 111a makes a second setting to use the soldering iron control device 100 for lead-free solder.

The request unit 111b requests the dedication information stored in the nonvolatile memory 224 included in the cartridge 220 attached to the handle part 210. The dedication information indicates whether the cartridge 220 is dedicated to leaded solder or dedicated to lead-free solder. The communication unit 102 (FIG. 4) receives the dedication information read from the nonvolatile memory 224.

The notification unit 111c makes a notification when the first setting is made by the setting unit 111a and the dedication information indicates that the cartridge 220 is dedicated to lead-free solder, or when the second setting is made by the setting unit 111a and the dedication information indicates that the cartridge 220 is dedicated to leaded solder. The notification unit 111c may make a notification with a voice or make a notification with an image.

For a voice, the notification unit 111c is implemented by a speaker and an amplifier. For an image, the notification unit 111c is implemented by the display control unit 107 and the display unit 108. The notification unit 113b (FIG. 21) is also implemented similarly.

The operator makes in advance either the first setting or the second setting. FIG. 13 is a flowchart describing this setting. With reference to FIGS. 4, 12, and 13, the operator inputs an instruction to display a setting screen for making the above setting by using the input unit 106 (step S61). In accordance with the instruction, the display control unit 107 causes the display unit 108 to display the setting screen (step S62).

When using the soldering iron control device 100 for leaded solder, the operator makes an input for leaded solder on the setting screen by using the input unit 106. When using the soldering iron control device 100 for lead-free solder, the operator makes an input for lead-free solder on the setting screen by using the input unit 106 (step S63). In accordance with the input, the setting unit 111a makes the first setting or the second setting (step S64).

The operator sets the dedication information in the nonvolatile memory 224 included in the cartridge 220. FIG. 14 is a flowchart describing this setting. With reference to FIGS. 2, 4 and 14, in a state where the cartridge 220 is attached to the handle part 210, the operator inputs an instruction to read the cartridge information CI by using the input unit 106 (step S71). When this instruction is input, the setting unit 111a (FIG. 12) instructs the microcomputer 211 included in the handle part 210 to read the cartridge information CI stored in the nonvolatile memory 224 included in the cartridge 220. In accordance with this instruction, the communication unit 102 transmits the instruction to read the cartridge information CI to the microcomputer 211 (step S72).

The microcomputer 211 receives the instruction to read the cartridge information CI (step S73). The microcomputer 211 reads the cartridge information CI from the nonvolatile memory 224 and transmits the cartridge information CI to the communication unit 102 (step S74). The communication unit 102 receives the cartridge information CI read from the nonvolatile memory 224 (step S75).

The display control unit 107 causes the display unit 108 to display a list of the received cartridge information CI (step S76). The operator inputs the dedication information in a dedication information field included in the list by using the input unit 106 (step S77). For example, the dedication information field includes a box indicating a flag dedicated to leaded solder and a box indicating a flag dedicated to lead-free solder. When the operator checks the former box, the dedication information indicating that the cartridge 220 is dedicated to leaded solder is input When the operator checks the latter box, the dedication information indicating that the cartridge 220 is dedicated to lead-free solder is input.

The operator inputs determination by using the input unit 106. With the determination input, the setting unit 111a (FIG. 12) instructs the microcomputer 211 to set the dedication information. In accordance with this instruction, the communication unit 102 transmits the instruction to set the dedication information to the microcomputer 211 (step S78).

The microcomputer 211 receives the instruction to set the dedication information (step S79). The microcomputer 211 stores the dedication information in the region 224c (FIG. 11) of the nonvolatile memory 224. Accordingly, the dedication information is set in the nonvolatile memory 224 (step S80).

With the setting described above, in the soldering iron control device 100, the setting to use leaded solder (first setting) or the setting to use lead-free solder (second setting) is made, and the cartridge 220 is also classified into the cartridge 220 dedicated to leaded solder and the cartridge 220 dedicated to lead-free solder. The operator needs to properly combine the setting of the soldering iron control device 100 with the cartridge 220. That is, when the cartridge 220 dedicated to leaded solder is used, the soldering iron control device 100 needs to have the first setting, whereas when the cartridge 220 dedicated to lead-free solder is used, the soldering iron control device 100 needs to have the second setting.

When the soldering iron control device 100 is turned on in a state where the cartridge 220 is attached to the handle part 210, the soldering iron control device 100 confirms whether the setting of the soldering iron control device 100 and the cartridge 220 are properly combined. FIG. 15 is a flowchart describing this confirmation. With reference to FIGS. 2, 4 and 15, the request unit 111b (FIG. 12) requests the dedication information from the microcomputer 211 included in the handle part 210. In accordance with this request, the communication unit 102 transmits the dedication information request to the microcomputer 211 (step S91).

The microcomputer 211 receives the dedication information request (step S92). The microcomputer 211 accesses the region 224c (FIG. 11) of the nonvolatile memory, and reads the dedication information from the region 224c (step S93). The microcomputer 211 transmits the dedication information to the communication unit 102 (step S94).

The communication unit 102 receives the dedication information (step S95). The notification unit 111c (FIG. 12) determines whether to make a notification based on details set by the setting unit 111a and details of the dedication information (step S96). That is, when the details of the setting are a setting for using leaded solder (first setting) and the dedication information indicates dedication to lead-free solder (Yes in step S96), the notification unit 111c makes a notification (step S97). When the details of the setting are a setting for using lead-free solder and the dedication information indicates dedication to leaded solder (Yes in step S96), the notification unit 111c makes a notification (step S97). For example, the notification unit 111c causes the display unit 108 to display a character image "Replace the cartridge or change details of the setting".

When the details of the setting are a setting for using leaded solder (first setting) and the dedication information indicates dedication to leaded solder (No in step S96), the notification unit 111c does not make a notification. When the details of the setting are a setting for using lead-free solder and the dedication information indicates dedication to lead-free solder (No in step S96), the notification unit 111c does not make a notification. The soldering iron control device 100 finishes the confirmation whether the setting of the soldering iron control device 100 and the cartridge 220 are properly combined.

When the notification unit 111c makes a notification (step S97), the temperature control unit 103 determines whether the setting unit 111a has set power supply prohibition. The operator can cause the setting unit 111a to set power supply prohibition in advance by using the input unit 106. When the temperature control unit 103 determines that the setting unit 111a has not set power supply prohibition (No in step S98), the soldering iron control device 100 finishes the confirmation whether the setting of the soldering iron control device 100 and the cartridge 220 are properly combined.

When the temperature control unit 103 determines that the setting unit 111a has set power supply prohibition (Yes in step S98), control to supply no power to the heater unit 222 of the cartridge 220 is performed (step S99). The soldering iron control device 100 finishes the confirmation whether the setting of the soldering iron control device 100 and the cartridge 220 are properly combined.

The fourth functional unit 112 will be described. The fourth functional unit 112 causes the nonvolatile memory 224 included in the cartridge 220 to store a calibration result regarding the cartridge 220 (in other words, calibration record). FIG. 16 is a functional block diagram of the fourth functional unit 112. The fourth functional unit 112 includes a storage processing unit 112a, a storage unit 112b, and a determination unit 112c.

In a state where the temperature control unit 103 (FIG. 4) controls the temperature of the tip 221 of the cartridge 220 at the set temperature (idling state), the storage processing unit 112a makes an instruction to write, in the nonvolatile memory 224 included in the cartridge 220, whether the temperature measurement device 300 (FIG. 3) has succeeded in calibration of the temperature of the tip 221, as the calibration result Similarly, the storage processing unit 112a makes an instruction to write, in the nonvolatile memory 224, whether the temperature measurement device 300 has succeeded in calibration of the leak voltage, as the calibration result. Also, the storage processing unit 112a makes an instruction to write, in the nonvolatile memory 224, whether the temperature measurement device 300 has succeeded in calibration of the resistance between the tip 221 and the earth, as the calibration result The nonvolatile memory 224 has functions of a predetermined storage unit.

The storage unit 112b stores in advance a temperature range in which temperature correction is not required for the set temperature.

The determination unit 112c determines whether the temperature obtained by the temperature measurement device 300 measuring the temperature of the tip 221 falls within a temperature range (preset normal range).

The temperature measurement device 300 and the soldering iron control device 100 can perform automatic calibration. The automatic calibration is to automatically calibrate the temperature of the tip 221, the leak voltage, and the resistance between the tip 221 and the earth. The automatic calibration will be described in detail. FIG. 17 is a flowchart describing an automatic calibration routine. With reference to FIGS. 3, 4 and 17, the soldering iron control device 100 shifts to an automatic calibration mode (step S101).

A detailed description will be provided. When the temperature measurement device 300 and the soldering iron control device 100 have a wired connection, the operator inputs a model (type) of the temperature measurement device 300 by using the input unit 106 of the soldering iron control device 100. With this input, the control processing unit 101 sets a mode of the soldering iron control device 100 as the automatic calibration mode. When the temperature measurement device 300 and the soldering iron control device 100 have a wireless connection, the operator presses a predetermined button (for example, transmission button) provided in the temperature measurement device 300. The temperature measurement device 300 transmits data that allows identification of the model of the temperature measurement device 300 to the soldering iron control device 100. The communication unit 102 of the soldering iron control device 100 receives the data. By performing key input (step S103), the control processing unit 101 sets the mode of the soldering iron control device 100 as the automatic calibration mode.

The model of the temperature measurement device 300 includes a model that can measure the temperature of the tip 221 and a model that can measure the temperature of the tip 221, the leak voltage, and the resistance between the tip 221 and the earth. The former model can measure neither the leak voltage nor the resistance between the tip 221 and the earth. The temperature measurement device 300 of the embodiment is the latter model.

The display control unit 107 causes the display unit 108 to display a predetermined image (for example, character image indicating "Waiting for instruction to perform automatic calibration") (step S102).

When the operator presses an ENTER key provided in the input unit 106 ("ENTER" in step S103), the soldering iron control device 100 performs a subroutine (step S104). The subroutine includes an automatic temperature calibration routine, an automatic voltage calibration routine, and an automatic resistance calibration routine. The automatic temperature calibration calibrates the temperature of the tip 221 automatically. The automatic voltage calibration calibrates the leak voltage automatically. The automatic resistance calibration calibrates the resistance between the tip 221 and the earth automatically.

When the temperature measurement device 300 is a model that can measure the temperature of the tip 221, the subroutine is an automatic temperature calibration routine. When the temperature measurement device 300 is a model that can measure the temperature of the tip 221, the leak voltage, and the resistance between the tip 221 and the earth, the subroutine includes the above three routines. In the latter case, the operator can set in advance calibration to perform in the control processing unit 101 by using the input unit 106. For example, when the automatic temperature calibration, the automatic voltage calibration, and the automatic resistance calibration are set, the soldering iron control device 100 performs the three routines. For example, when the automatic temperature calibration is set, the soldering iron control device 100 performs the automatic temperature calibration routine.

The control processing unit 101 determines whether the subroutine has finished (step S105). When the control processing unit 101 determines that the subroutine has not finished (No in step S105), the soldering iron control device 100 performs the process of step S104.

When the control processing unit 101 determines that the subroutine has finished (Yes in step S105), the display control unit 107 causes the display unit 108 to display the calibration result and the like (step S106). Then, the soldering iron control device 100 finishes the automatic calibration routine. The calibration result indicates acceptance or rejection of each calibration. The acceptance means that calibration of the temperature of the tip 221 or the like has succeeded (that is, the temperature of the tip 221 or the like is within a preset normal range). The rejection means that the measurement of the temperature of the tip 221 or the like has failed, or that the temperature of the tip 221 or the like is not within a preset normal range. In each calibration, the display unit 108 displays the measurement value along with the calibration result when the calibration result is acceptance, and displays success or failure of temperature correction when the temperature correction of the tip 221 is attempted.

When the operator presses a BACK key provided in the input unit 106 ("BACK" in step S103), the soldering iron control device 100 finishes the automatic calibration routine.

When the operator does not press the ENTER key or the BACK key provided in the input unit 106 ("None" in step S103), the control processing unit 101 determines whether a timeout occurs (step S107). The timeout means reaching a time limit set in advance. When the control processing unit 101 does not determine that a timeout occurs (No in step S107), the process of step S103 is performed. When the control processing unit 101 determines that a timeout occurs (Yes in step S107), the soldering iron control device 100 finishes the automatic calibration routine.

The automatic temperature calibration routine, which is one of the subroutines of step S104 (FIG. 17), will be described. FIGS. 18A and 18B are flowcharts describing the automatic temperature calibration routine. With reference to FIGS. 3, 4 and 18A, the control processing unit 101 determines whether the automatic temperature calibration has been set (step S1041). When the control processing unit 101 determines that the automatic temperature calibration has not been set (No in step S1041), the soldering iron control device 100 finishes the automatic temperature calibration routine (FIG. 18B).

When the control processing unit 101 determines that the automatic temperature calibration has been set (Yes in step S1041), the temperature control unit 103 determines whether the temperature indicated by the temperature sensor 223 (FIG. 2) (sensor temperature) included in the cartridge 220 has reached the set temperature set in the temperature control unit 103 (step S1042). When the temperature control unit 103 determines that the sensor temperature has not reached the set temperature (No in step S1042), the display control unit 107 causes the display unit 108 to display a predetermined image (for example, character image indicating "Waiting for sensor temperature to reach") (step S1043). Then, the temperature control unit 103 performs the process of step S1042.

When the temperature control unit 103 determines that the sensor temperature has reached the set temperature (Yes in step S1042), the communication unit 102 waits for reception of the temperature of the tip 221 measured by the temperature measurement device 300 (temperature data). The display control unit 107 causes the display unit 108 to display a predetermined image (for example, character image indicating "Waiting for reception of temperature data") (step S1044).

The control processing unit 101 determines whether the communication unit 102 has received the temperature data transmitted by the temperature measurement device 300 (step S1045). When the control processing unit 101 determines that the communication unit 102 has not received the temperature data (No in step S1045), the control processing unit 101 determines whether a timeout occurs (step S1046). The timeout time is set relatively long (for example, 5 minutes). This is because it may take time to measure the temperature of the tip 221 by the temperature measurement device 300. When the control processing unit 101 does not determine that a timeout occurs (No in step S1046), the control processing unit 101 returns to the process of step S1045. When the control processing unit 101 determines that a timeout occurs (Yes in step S1046), the process of writing the calibration result or the like in the nonvolatile memory 224 included in the cartridge 220 is performed (step S1048).

A detailed description will be provided. Here, the storage processing unit 112a (FIG. 16) issues an instruction to write the calibration result (rejection) in the nonvolatile memory 224. The calibration result of rejection means that the calibration has failed. The calibration result of acceptance means that the calibration has succeeded. As will be described later, when the calibration result is acceptance, the temperature data is written in the nonvolatile memory 224. In accordance with this instruction, the communication unit 102 transmits the write instruction and the calibration result (rejection) to the soldering iron 200. In accordance with the write instruction, the microcomputer 211 (FIG. 2) included in the handle part 210 writes the calibration result (rejection) in the nonvolatile memory 224. Since this process is similar to those of steps S28 and S29 of FIG. 8, detailed description will be omitted. The soldering iron control device 100 finishes the automatic temperature calibration routine (FIG. 18B).

When the control processing unit 101 determines that the communication unit 102 has received the temperature data transmitted by the temperature measurement device 300 (Yes in step S1045), the determination unit 112c (FIG. 16) determines whether the temperature data is within a range set in advance with respect to the set temperature (for example, within ±10 degrees) (step S1047). That is, the storage unit 112b (FIG. 16) stores in advance a temperature range in which temperature correction is not required (the temperature of the tip 221 is in a preset normal range). The determination unit 112c determines whether the value obtained by the temperature measurement device 300 measuring the temperature of the tip 221 falls within the temperature range.

When the determination unit 112c determines that the temperature data is within the range set in advance (Yes in step S1047), the process of writing the calibration result or the like in the nonvolatile memory 224 included in the cartridge 220 is performed (step S1048). A detailed description will be provided. The storage processing unit 112a (FIG. 16) issues an instruction to write the calibration result (acceptance) and the temperature data in association with each other in the nonvolatile memory 224. In accordance with this instruction, the communication unit 102 transmits the write instruction, the calibration result (acceptance), and the temperature data to the soldering iron 200. In accordance with the write instruction, the microcomputer 211 (FIG. 2) included in the handle part 210 writes the calibration result (acceptance) and the temperature data in association with each other in the nonvolatile memory 224.

When the determination unit 112c determines that the temperature data is not within the range set in advance (No in step S1047), an offset is calculated (step S1049). The offset is a difference between the temperature data and the set temperature.

The determination unit 112c determines whether the offset is within a range set in advance (for example, within ±50 degrees with respect to the set temperature) (step S1050). When the determination unit 112c determines that the offset is not within the range set in advance (No in step S1050), temperature correction is not performed. That is, when the offset is too large, temperature correction is not performed. The display control unit 107 causes the display unit 108 to display a predetermined image (for example, character image indicating "Temperature correction is not performed") (step S1051).

Then, the process of writing the calibration result or the like in the nonvolatile memory 224 included in the cartridge 220 is performed (step S1048). A detailed description will be provided. The storage processing unit 112a (FIG. 16) issues an instruction to write the calibration result (rejection), the temperature data, and information indicating that temperature correction is not performed in association with one another in the nonvolatile memory 224. The rejection means calibration failure as described above. In accordance with this instruction, the communication unit 102 transmits the write instruction, the calibration result (rejection), the temperature data, and the information indicating that temperature correction is not performed to the soldering iron 200. In accordance with the write instruction, the microcomputer 211 (FIG. 2) included in the handle part 210 writes the calibration result (rejection), the temperature data, and the information indicating that temperature correction is not performed in association with one another in the nonvolatile memory 224.

When the determination unit 112c determines that the offset is within the range set in advance (Yes in step S1050), the temperature control unit 103 performs control to correct the temperature under the offset (step S1052). When the offset is positive, the temperature control unit 103 increases the amount of power supply to the heater unit 222. When the offset is negative, the temperature control unit 103 reduces the amount of power supply to the heater unit 222 and causes the temperature of the tip 221 to agree with the set temperature.

When the temperature control unit 103 is performing this control, the display control unit 107 causes the display unit 108 to display a predetermined image (for example, character image indicating "Waiting for temperature correction") (step S1053). The temperature control unit 103 performs temperature correction control until the temperature correction is completed (No in step S1054).

When the temperature control unit 103 completes the temperature correction (Yes in step S1054), in order to confirm that the correction is correctly performed, the temperature measurement device 300 again measures the temperature of the tip 221. With reference to FIGS. 3, 4 and 18B, the display control unit 107 causes the display unit 108 to display a predetermined image (for example, character image indicating "Waiting for reception of temperature data for confirmation") (step S1055).

The control processing unit 101 determines whether the communication unit 102 has received the temperature data transmitted by the temperature measurement device 300 (step S1056). When the control processing unit 101 determines that the communication unit 102 has not received the temperature data (No in step S1056), the control processing unit 101 determines whether a timeout occurs (step S1057). When the control processing unit 101 does not determine that a timeout occurs (No in step S1057), the control processing unit 101 returns to the process of step S 1056. When the control processing unit 101 determines that a timeout occurs (Yes in step S1057), the display control unit 107 causes the display unit 108 to display a predetermined image (for example, character image indicating "Temperature correction failure") (step S1058). The offset is restored. That is, since the temperature correction has failed, the offset value is not changed and is maintained at the original value.

Then, the process of writing the calibration result or the like in the nonvolatile memory 224 included in the cartridge 220 is performed (step S1059). A detailed description will be provided. The storage processing unit 112a (FIG. 16) issues an instruction to write, in the nonvolatile memory 224, the calibration result (rejection), the temperature data, and the information indicating the temperature correction failure in association with one another. In accordance with this instruction, the communication unit 102 transmits the write instruction, the calibration result (rejection), the temperature data, and the information indicating the temperature correction failure to the soldering iron 200. In accordance with the write instruction, the microcomputer 211 (FIG. 2) included in the handle part 210 writes, in the nonvolatile memory 224, the calibration result (rejection), the temperature data, and the information indicating the temperature correction failure in association with one another. The soldering iron control device 100 finishes the automatic temperature calibration routine.

When the control processing unit 101 determines that the communication unit 102 has received the temperature data (Yes in step S1056), the determination unit 112c (FIG. 16) determines whether the temperature data is within the range set in advance with respect to the set temperature (step S1060). This process is the same as that of step S1047 (FIG. 18A).

When the determination unit 112c determines that the temperature data is within the range set in advance (Yes in step S1060), the process of writing the calibration result or the like in the nonvolatile memory 224 included in the cartridge 220 is performed (step S1059). A detailed description will be provided. The storage processing unit 112a (FIG. 16) issues an instruction to write, in the nonvolatile memory 224, the calibration result (acceptance), the temperature data, and the information indicating the temperature correction success in association with one another. In accordance with this instruction, the communication unit 102 transmits the write instruction, the calibration result (acceptance), the temperature data, and the information indicating the temperature correction success to the soldering iron 200. In accordance with the write instruction, the microcomputer 211 (FIG. 2) included in the handle part 210 writes, in the nonvolatile memory 224, the calibration result (acceptance), the temperature data, and the information indicating the temperature correction success in association with one another. The soldering iron control device 100 finishes the automatic temperature calibration routine.

When the determination unit 112c determines that the temperature data is not within the range set in advance (No in step S1060), the determination unit 112c determines whether the number of retries set in advance remains (step S1061). The retry is to repeat the process from step S1049 to step S1060 when the determination unit 112c determines that the temperature data is not within the range set in advance (No in step S1060). Every time the retry is made, the number of retries decreases by one.

When the determination unit 112c determines that the number of retries remains (Yes in step S1061), the offset is calculated (step S1049). Here, the offset value before retry is not discarded but is corrected again.

When the determination unit 112c determines that the number of retries does not remain (No in step S1061), the process of step S1058 is performed. Then, the process of writing the calibration result or the like in the nonvolatile memory 224 included in the cartridge 220 is performed (step S1059).

A detailed description will be provided. The storage processing unit 112a (FIG. 16) issues an instruction to write, in the nonvolatile memory 224, the calibration result (rejection), the temperature data, and the information indicating the temperature correction failure in association with one another. In accordance with this instruction, the communication unit 102 transmits the write instruction, the calibration result (rejection), the temperature data, and the information indicating the temperature correction failure to the soldering iron 200. In accordance with the write instruction, the microcomputer 211 (FIG. 2) included in the handle part 210 writes, in the nonvolatile memory 224, the calibration result (rejection), the temperature data, and the information indicating the temperature correction failure in association with one another.

The soldering iron control device 100 finishes the automatic temperature calibration routine.

The automatic voltage calibration routine, which is one of the subroutines of step S104 (FIG. 17), will be described. FIG. 19 is a flowchart describing the automatic voltage calibration routine. With reference to FIGS. 3, 4 and 19, on determination that the automatic temperature calibration has not finished (No in step S1071), the control processing unit 101 continues the process of step S1071.

On determination that the automatic temperature calibration has finished (Yes in step S1071), the control processing unit 101 determines whether the temperature measurement device 300 has a function of measuring the leak voltage, based on the model of the temperature measurement device 300 (step S1072). The model of the temperature measurement device 300 has been described in step S101 (FIG. 17). Note that when the automatic temperature calibration is not set in the control processing unit 101, the control processing unit 101 omits step S1071 and performs step S1072.

When the control processing unit 101 determines that the temperature measurement device 300 does not have a function of measuring the leak voltage (No in step S1072), the soldering iron control device 100 finishes the automatic voltage calibration routine.

On determination that the temperature measurement device 300 has a function of measuring the leak voltage (Yes in step S1072), the control processing unit 101 determines whether automatic voltage calibration has been set (step S1073). When the control processing unit 101 determines that automatic voltage calibration has not been set (No in step S1073), the soldering iron control device 100 finishes the automatic voltage calibration routine.

On determination that automatic voltage calibration has been set (Yes in step S1073), the control processing unit 101 determines whether the soldering iron control device 100 and the temperature measurement device 300 have a wired connection (step S1074). When the control processing unit 101 determines that the soldering iron control device 100 and the temperature measurement device 300 have a wired connection (Yes in step S1074), the control processing unit 101 performs control to set the mode of the temperature measurement device 300 as a leak voltage measurement mode (step S1075). The display control unit 107 causes the display unit 108 to display a predetermined image (for example, character image indicating "Waiting for reception of leak voltage data") (step S1076).

When the control processing unit 101 determines that the soldering iron control device 100 and the temperature measurement device 300 do not have a wired connection (No in step S1074), the operator sets the mode of the temperature measurement device 300 as the leak voltage measurement mode. Then, the process of step S1076 is performed. The soldering iron control device 100 and the temperature measurement device 300 not having a wired connection means that the soldering iron control device 100 and the temperature measurement device 300 perform wireless communication (for example, infrared communication).

The control processing unit 101 determines whether the communication unit 102 has received the leak voltage data transmitted by the temperature measurement device 300 (step S1077). The leak voltage data refers to a leak voltage measured by the temperature measurement device 300. When the control processing unit 101 determines that the communication unit 102 has not received the leak voltage data (No in step S1077), the control processing unit 101 determines whether a timeout occurs (step S1078). When the control processing unit 101 does not determine that a timeout occurs (No in step S1078), the control processing unit 101 returns to the process of step S1077.

When the control processing unit 101 determines that a timeout occurs (Yes in step S1078), the process of writing the calibration result or the like in the nonvolatile memory 224 included in the cartridge 220 is performed (step S1079). A detailed description will be provided. Here, the storage processing unit 112a (FIG. 16) issues an instruction to write the calibration result (rejection) in the nonvolatile memory 224. As will be described later, when the calibration result is acceptance (that is, when the leak voltage is within a preset normal range), the leak voltage data is written in the nonvolatile memory 224. In accordance with this instruction, the communication unit 102 transmits the write instruction and the calibration result (rejection) to the soldering iron 200. In accordance with the write instruction, the microcomputer 211 (FIG. 2) included in the handle part 210 writes the calibration result (rejection) in the nonvolatile memory 224. The soldering iron control device 100 finishes the automatic voltage calibration routine.

When the control processing unit 101 determines that the communication unit 102 has received the leak voltage data (Yes in step S1077), the process of writing the calibration result or the like in the nonvolatile memory 224 included in the cartridge 220 is performed (step S1079). A detailed description will be provided. When the leak voltage indicated by the leak voltage data is within a preset normal range, the control processing unit 101 determines that the calibration result is acceptance (calibration success). When the leak voltage is not within the normal range, the control processing unit 101 determines that the calibration result is rejection (calibration failure). The storage processing unit 112a (FIG. 16) issues an instruction to write the calibration result and the leak voltage data in association with each other in the nonvolatile memory 224. In accordance with this instruction, the communication unit 102 transmits the write instruction, the calibration result, and the leak voltage data to the soldering iron 200. In accordance with the write instruction, the microcomputer 211 included in the handle part 210 writes the calibration result and the leak voltage data in association with each other in the nonvolatile memory 224. The soldering iron control device 100 finishes the automatic voltage calibration routine.

The automatic resistance calibration routine, which is one of the subroutines of step S104 (FIG. 17), will be described. FIG. 20 is a flowchart describing the automatic resistance calibration routine. With reference to FIGS. 3, 4 and 20, on determination that the automatic voltage calibration has not finished (No in step S1091), the control processing unit 101 performs the process of step S1091.

On determination that the automatic voltage calibration has finished (Yes in step S1091), the control processing unit 101 determines whether the temperature measurement device 300 has a function of measuring the resistance between the tip 221 and the earth, based on the model of the temperature measurement device 300 (step S1092). The model of the temperature measurement device 300 has been described in step S101 (FIG. 17). Note that when the automatic voltage calibration is not set in the control processing unit 101, the control processing unit 101 omits step S1091 and performs step S1092.

When the control processing unit 101 determines that the temperature measurement device 300 does not have a function of measuring the resistance between the tip 221 and the earth (No in step S1092), the soldering iron control device 100 finishes the automatic resistance calibration routine.

On determination that the temperature measurement device 300 has a function of measuring the resistance between the tip 221 and the earth (Yes in step S1092), the control processing unit 101 determines whether automatic resistance calibration has been set (step S1093). When the control processing unit 101 determines that the automatic resistance calibration has not been set (No in step S1093), the soldering iron control device 100 finishes the automatic resistance calibration routine.

On determination that automatic resistance calibration has been set (Yes in step S1093), the control processing unit 101 determines whether the soldering iron control device 100 and the temperature measurement device 300 have a wired connection (step S1094). On determination that the soldering iron control device 100 and the temperature measurement device 300 have a wired connection (Yes in step S1094), the control processing unit 101 performs control to set the mode of the temperature measurement device 300 as a mode of measuring the resistance between the tip 221 and the earth (step S1095). The display control unit 107 causes the display unit 108 to display a predetermined image (for example, character image indicating "Waiting for reception of resistance data") (step S1096).

When the control processing unit 101 determines that the soldering iron control device 100 and the temperature measurement device 300 do not have a wired connection (No in step S1094), the operator sets the mode of the temperature measurement device 300 as a mode of measuring the resistance between the tip 221 and the earth. Then, the process of step S1096 is performed.

The control processing unit 101 determines whether the communication unit 102 has received the resistance data transmitted by the temperature measurement device 300 (step S1097). The resistance data refers to a resistance measured by the temperature measurement device 300 between the tip 221 and the earth. When the control processing unit 101 determines that the communication unit 102 has not received the resistance data (No in step S1097), the control processing unit 101 determines whether a timeout occurs (step S1098). When the control processing unit 101 does not determine that a timeout occurs (No in step S1098), the control processing unit 101 returns to the process of step S1097.

When the control processing unit 101 determines that a timeout occurs (Yes in step S1098), the process of writing the calibration result or the like in the nonvolatile memory 224 included in the cartridge 220 is performed (step S1099). A detailed description will be provided. Here, the storage processing unit 112a (FIG. 16) issues an instruction to write the calibration result (rejection) in the nonvolatile memory 224. In accordance with this instruction, the communication unit 102 transmits the write instruction and the calibration result (rejection) to the soldering iron 200. In accordance with the write instruction, the microcomputer 211 (FIG. 2) included in the handle part 210 writes the calibration result (rejection) in the nonvolatile memory 224. The soldering iron control device 100 finishes the automatic resistance calibration routine.

When the control processing unit 101 determines that the communication unit 102 has received the resistance data (Yes in step S1097), the process of writing the calibration result or the like in the nonvolatile memory 224 included in the cartridge 220 is performed (step S1099). A detailed description will be provided. When the value indicated by the resistance data is within a preset normal range, the control processing unit 101 determines that the calibration result is acceptance (calibration success). When the value is not within the normal range, the control processing unit 101 determines that the calibration result is rejection (calibration failure). The storage processing unit 112a (FIG. 16) issues an instruction to write the calibration result and the resistance data in association with each other in the nonvolatile memory 224. In accordance with this instruction, the communication unit 102 transmits the write instruction, the calibration result, and the resistance data to the soldering iron 200. In accordance with the write instruction, the microcomputer 211 included in the handle part 210 writes the calibration result and the resistance data in association with each other in the nonvolatile memory 224. The soldering iron control device 100 finishes the automatic resistance calibration routine.

The calibration result or the like may be stored in the storage unit 1 12b (predetermined storage unit) instead of being stored in the nonvolatile memory 224. In this case, the storage processing unit 112a causes the storage unit 112b to store the calibration result or the like and identification information (ID information) of the cartridge 220 from which the calibration result or the like is obtained in association with each other. The identification information of the cartridge 220 can be obtained from the cartridge information CI. Note that when the cartridge 220 does not include the nonvolatile memory 224, for example, the identification information is obtained from a barcode attached to the cartridge 220.

The fifth functional unit 113 will be described. The fifth functional unit 113 monitors falling of the soldering iron 200. FIG. 21 is a functional block diagram of the fifth functional unit 113. The fifth functional unit 113 includes a determination unit 113a and a notification unit 113b.

With reference to FIGS. 2, 4 and 21, the determination unit 113a determines whether the soldering iron 200 has fallen based on an output signal of the acceleration sensor 212 included in the handle part 210. One example of a determination method will be described in detail. The determination unit 113a stores a threshold of acceleration in advance, and determines that the soldering iron 200 has fallen when the acceleration indicated by the output signal of the acceleration sensor 212 exceeds the threshold. The threshold is a value lower than a gravitational acceleration (about 9.80 $m/s^2$) and is determined based on the gravitational acceleration.

When the determination unit 113a determines that the soldering iron 200 has fallen, the temperature control unit 103 performs control to stop (prohibit) power supply to the heater unit 222 included in the soldering iron 200.

The notification unit 113b makes a notification when the determination unit 113a determines that the soldering iron 200 has fallen. The notification unit 113b may make a notification by sounding an alarm, or may make a notification by displaying an alarm on the display unit 108. This has a function of stopping power supply and a function of making a notification, but may have only one of the functions.

The process of monitoring falling of the soldering iron 200 will be described. FIG. 22 is a flowchart describing this monitoring process. With reference to FIGS. 2, 4 and 22, in a state where power is supplied by the temperature control unit 103 to the heater unit 222 included in the cartridge 220 of the soldering iron 200 (in other words, in a state where the soldering iron 200 can be used), the determination unit 113a (FIG. 21) instructs the microcomputer 211 to request the output signal of the acceleration sensor 212. In accordance with this instruction, the communication unit 102 transmits the request for the output signal of the acceleration sensor 212 to the microcomputer 211 (step S141).

The microcomputer 211 receives this request (step S142). The microcomputer 211 transmits the output signal of the acceleration sensor 212 to the communication unit 102 by using the cable CB (step S143).

The communication unit 102 receives the output signal of the acceleration sensor 212 (step S144). The determination unit 113a determines whether the acceleration indicated by the output signal of the acceleration sensor 212 received by the communication unit 102 exceeds the threshold (step S145). When the determination unit 113a determines that the acceleration indicated by the output signal of the acceleration sensor 212 does not exceed the threshold (No in step S145), the process of step S145 is repeated.

When the determination unit 113a determines that the acceleration indicated by the output signal of the acceleration sensor 212 exceeds the threshold (Yes in step S145), the temperature control unit 103 performs control to stop power supply to the heater unit 222 (step S146). By this control, heating of the tip 221 is forcibly finished. Then, the notification unit 113b (FIG. 21) makes a notification (step S147).

The present invention provides a combination of a soldering iron and a soldering iron control device that allows electrical connection to the soldering iron and controls a temperature of a tip of the soldering iron, and a temperature measurement device for measuring the temperature of the tip, the soldering iron including: a handle part; and a cartridge that is attachable to and detachable from the handle part and includes the tip and a temperature sensor to be used for measuring the temperature of the tip, a storage unit being included either in the soldering iron control device or in the cartridge, the soldering iron control device including: a control unit configured to control the temperature of the tip at a set temperature based on the temperature measured by the temperature sensor; and a storage processing unit configured to perform a process of causing the storage unit to store whether the temperature measurement device different from the temperature sensor has succeeded in calibration of the temperature of the tip as a calibration result in a state where the temperature of the tip is controlled at the set temperature.

The success in calibration of the temperature of the tip refers to confirmation that the temperature of the tip measured using the temperature measurement device is within a preset normal range. By saving the calibration result, it is possible to meet the requirement for ensuring traceability of the cartridge. The soldering iron control device of the present invention can store the calibration result of the cartridge in the nonvolatile memory included in the cartridge. This can eliminate the need for the soldering iron control device to manage the calibration result for each cartridge.

Optionally, the temperature measurement device includes a leak voltage measurement unit configured to measure a leak voltage generated by a leak current from the tip, and the storage processing unit performs a process of causing the storage unit to store, as the calibration result, whether the temperature measurement device has succeeded in calibration of the leak voltage.

The success in calibration of the leak voltage refers to confirmation that the leak voltage measured using the temperature measurement device is within a preset normal range. With this configuration, the leak voltage can be included in the calibration result.

Optionally, the temperature measurement device includes a resistance measurement unit configured to measure a resistance between the tip and earth, and the storage processing unit performs a process of causing the storage unit to store, as the calibration result, whether the temperature measurement device has succeeded in calibration of the resistance.

The success in calibration of the resistance refers to confirmation that the resistance between the tip and the earth measured using the temperature measurement device is within a preset normal range. This refers to success in measurement of the resistance between the tip and the earth by using the temperature measurement device. With this configuration, the resistance between the tip and the earth can be included in the calibration result.

Optionally, the soldering iron control device further includes the storage unit, and the storage processing unit causes the storage unit to store the calibration result and identification information of the cartridge in association with each other.

With this configuration, the soldering iron control device includes the storage unit that stores the calibration result.

Optionally, the cartridge includes the storage unit, which is a nonvolatile memory and is configured to repeatedly write information, and the storage processing unit issues an instruction to write the calibration result in the nonvolatile memory.

With this configuration, the cartridge includes the storage unit that stores the calibration result.

## Claims

**1.** A combination of a soldering iron (200),

a soldering iron control device (100) that allows electrical connection to the soldering iron (200) and controls a temperature of a tip (221) of the soldering iron (200), and a temperature measurement device (300) for measuring the temperature of the tip (221),

the soldering iron (200) including: a handle part (210); and a cartridge (220) that is attachable to and detachable from the handle part (210) and includes the tip (221) and a temperature sensor (223) to be used for measuring the temperature of the tip (221), a storage unit (112b, 224) being included either in the soldering iron control device (100) or in the cartridge (220)

and being **characterised by**:

the soldering iron control device (100) comprising:

a control unit (103) configured to control the temperature of the tip (221) at a set temperature based on the temperature measured by the temperature sensor (223); and

a storage processing unit (112a) configured to perform a process of causing the storage unit (112b, 224) to store whether the temperature measurement device (300) different from the temperature sensor (223) has succeeded in calibration of the temperature of the tip (221) as a calibration result in a state where the temperature of the tip (221) is controlled at the set temperature.

**2.** The combination according to claim 1, wherein

the temperature measurement device (300) includes a leak voltage measurement unit (302) configured to measure a leak voltage generated by a leak current from the tip (221), and

the storage processing unit (112a) performs a process of causing the storage unit to store, as the calibration result, whether the temperature measurement device (300) has succeeded in calibration of the leak voltage.

**3.** The combination according to claim 1 or 2, wherein

the temperature measurement device (300) includes a resistance measurement unit (303) configured to measure a resistance between the tip (221) and earth and

the storage processing unit (112a) performs a process of causing the storage unit to store, as the calibration result, whether the temperature measurement device (300) has succeeded in calibration of the resistance.

**4.** The combination according to any one of claims 1 to 3, wherein

the soldering iron control device (100) further includes the storage unit (112b), and

the storage processing unit (112a) causes the storage unit (112b) to store the calibration result and identification information of the cartridge (220) in association with each other.

**5.** The combination according to any one of claims 1 to 3, wherein

the cartridge (220) includes the storage unit, the storage unit being a nonvolatile memory (224) and being configured to repeatedly write information, and

the storage processing unit (112a) issues an instruction to write the calibration result in the nonvolatile memory (224).

**6.** A soldering iron management system (1000) comprising:

the combination according to claim 1; and
a computer device (400) configured to communicate with the soldering iron control device (100) by using a network (NW),
wherein
the soldering iron control device (100) includes a communication unit (102) configured to transmit the calibration result stored in the storage unit to the computer device (400) by using the network (NW).

**7.** The combination according to any one of claims 1 to 3, wherein the cartridge (220) further includes the storage unit, the storage unit being a nonvolatile memory (224) configured to repeatedly write information including the calibration result.

**8.** The combination according to claim 1, wherein the storage processing unit (112a) further causes the storage unit to store the temperature of the tip (221) measured by the temperature measurement device (300) during the calibration of the temperature of the tip (221) when the calibration result indicates a success in the calibration of the temperature of the tip (221).

**Patentansprüche**

**1.** Kombination aus einem Lötkolben (200), einer Lötkolbensteuerungsvorrichtung (100), die eine elektrische Verbindung mit dem Lötkolben (200) ermöglicht und eine Temperatur einer Spitze (221) des Lötkolbens (200) steuert, und einer Temperaturmessvorrichtung (300) zum Messen der Temperatur der Spitze (221),

wobei der Lötkolben (200) aufweist: einen Griffteil (210); und eine Patrone (220), die an bzw. von dem Griffteil (210) anbringbar und lösbar ist und die Spitze (221) und einen Temperatursensor (223), der zum Messen der Temperatur der Spitze (221) zu verwenden ist, aufweist, wobei entweder in der Lötkolbensteuerungsvorrichtung (100) oder in der Patrone (220) eine Speichereinheit (112b, 224) enthalten ist,
und **dadurch gekennzeichnet, dass**:
die Lötkolbensteuerungsvorrichtung (100) aufweist:

eine Steuerungseinheit (103), die konfiguriert ist, die Temperatur der Spitze (221) auf Basis der vom Temperatursensor (223) gemessenen Temperatur auf eine Solltemperatur zu regeln; und
eine Speicherverarbeitungseinheit (112a), die konfiguriert ist, einen Prozess des Veranlassens der Speichereinheit (112b, 224) zum Speichern, als ein Kalibrationsergebnis, ob die vom Temperatursensor (223) verschiedene Temperaturmessvorrichtung (300) bei der Kalibrierung der Temperatur der Spitze (221) erfolgreich war, in einem Zustand in dem die Temperatur der Spitze (221) auf die Solltemperatur geregelt wird, durchzuführen.

**2.** Kombination nach Anspruch 1, wobei

die Temperaturmessvorrichtung (300) eine Leckspannungsmesseinheit (302) aufweist, die konfiguriert ist, eine vom Leckstrom von der Spitze (221) erzeugte Leckspannung zu messen, und
die Speicherverarbeitungseinheit (112a) einen Prozess des Veranlassens der Speichereinheit zum Speichern, ob die Temperaturmessvorrichtung (300) bei der Kalibrierung der Leckspannung erfolgreich war, als das Kalibrationsergebnis durchführt.

**3.** Kombination nach Anspruch 1 oder 2, wobei

die Temperaturmessvorrichtung (300) eine Widerstandsmessvorrichtung (303) aufweist, die konfiguriert ist, einen Widerstand zwischen der Spitze (221) und Erde zu messen, und
die Speicherverarbeitungseinheit (112a) einen Prozess des Veranlassens der Speichereinheit zum Speichern, als das Kalibrationsergebnis, ob die Temperaturmessvorrichtung (300) bei der Kalibrierung des Widerstands erfolgreich war, durchführt.

**4.** Kombination nach einem der Ansprüche 1 bis 3, wobei
die Lötkolbensteuerungsvorrichtung (100) ferner die Speichereinheit (112) aufweist und
die Speicherverarbeitungseinheit (112a) die Speichereinheit (112b) zum Speichern des Kalibrationsergebnisses und von Identifikationsinformationen der Patrone (220) in Verbindung miteinander veranlasst.

**5.** Kombination nach einem der Ansprüche 1 bis 3, wobei

die Patrone (220) die Speichereinheit aufweist, wobei die Speichereinheit ein nichtflüchtiger Speicher (224) ist und konfiguriert ist, wiederholt Informationen zu schreiben, und
die Speicherverarbeitungseinheit (112a) eine Anweisung zum Schreiben des Kalibrationsergebnisses in den nichtflüchtigen Speicher (224) ausgibt.

**6.** Lötkolbenmanagementsystem (1000), aufweisend:

die Kombination nach Anspruch 1; und
eine Computervorrichtung (400), die konfiguriert ist, mithilfe eines Netzwerks (NW) mit der Lötkolbensteuerungsvorrichtung (100) zu kommunizieren,
wobei
die Lötkolbensteuerungsvorrichtung (100) eine Kommunikationseinheit (102) aufweist, die konfiguriert ist, das in der Speichereinheit gespeicherte Kalibrationsergebnis mithilfe des Netzwerks (NW) an die Computervorrichtung (400) zu übertragen.

**7.** Kombination nach einem der Ansprüche 1 bis 3, wobei die Patrone (220) ferner die Speichereinheit aufweist, wobei die Speichereinheit ein nichtflüchtiger Speicher (224) ist, der konfiguriert ist, das Kalibrationsergebnis aufweisende Informationen wiederholt zu schreiben.

**8.** Kombination nach Anspruch 1, wobei
die Speicherverarbeitungseinheit (112a) ferner die Speichereinheit veranlasst, die während der Kalibrierung der Temperatur der Spitze (221) durch die Temperaturmessvorrichtung (300) gemessene Temperatur der Spitze (221) zu speichern, wenn das Kalibrationsergebnis einen Erfolg bei der Kalibrierung der Temperatur der Spitze (221) angibt.

**Revendications**

**1.** Combinaison d'un fer à souder (200), d'un dispositif de commande de fer à souder (100) qui permet une connexion électrique au fer à souder (200) et commande une température d'une panne (221) du fer à souder (200), et d'un dispositif de mesure de température (300) destiné à mesurer la température de la panne (221),

le fer à souder (200) comportant : une partie manche (210) ; et une cartouche (220) qui peut être attachée à et détachée de la partie manche (210) et comporte la panne (221) et un capteur de température (223) devant être utilisé pour mesurer la température de la panne (221), une unité de stockage (112b, 224) étant incluse soit dans le dispositif de commande de fer à souder (100) soit dans la cartouche (220) et étant **caractérisée par** :

le dispositif de commande de fer à souder (100) comprenant :

une unité de commande (103) configurée pour commander la température de la panne (221) à une température définie basée sur la température mesurée par le capteur de température (223) ; et
une unité de traitement de stockage (112a) configurée pour réaliser un traitement consistant à amener l'unité de stockage (112b, 224) à stocker si oui ou non le dispositif de mesure de température (300) différent du capteur de température (223) a réussi l'étalonnage de la température de la panne (221) en tant que résultat d'étalonnage dans un état dans lequel la température de la panne (221) est commandée à la température définie.

**2.** Combinaison selon la revendication 1, dans laquelle

le dispositif de mesure de température (300) comporte une unité de mesure de tension de fuite (302) configurée pour mesurer une tension de fuite générée par un courant de fuite à partir de la panne (221), et
l'unité de traitement de stockage (112a) réalise un traitement consistant à amener l'unité de stockage à stocker, en tant que résultat d'étalonnage, si oui ou non le dispositif de mesure de température (300) a réussi l'étalonnage de la tension de fuite.

**3.** Combinaison selon la revendication 1 ou 2, dans laquelle

le dispositif de mesure de température (300) comporte une unité de mesure de résistance (303) configurée pour mesurer une résistance entre la panne (221) et la terre et
l'unité de traitement de stockage (112a) réalise un traitement consistant à amener l'unité de stockage à stocker, en tant que résultat d'étalonnage, si oui ou non le dispositif de mesure de température (300) a réussi l'étalonnage de la résistance.

**4.** Combinaison selon l'une quelconque des revendications 1 à 3, dans laquelle

le dispositif de commande de fer à souder (100) comporte en outre l'unité de stockage (112b), et
l'unité de traitement de stockage (112a) amène l'unité de stockage (112b) à stocker le résultat d'étalonnage et les informations d'identification de la cartouche (220) en association l'un avec les autres.

**5.** Combinaison selon l'une quelconque des revendications 1 à 3, dans laquelle

la cartouche (220) comporte l'unité de stockage, l'unité de stockage étant une mémoire non volatile (224) et étant configurée pour écrire de façon répétée des informations, et
l'unité de traitement de stockage (112a) délivre une instruction pour écrire le résultat d'étalonnage dans la mémoire non volatile (224).

**6.** Système de gestion de fer à souder (1000) comprenant :

la combinaison selon la revendication 1 ; et
un dispositif informatique (400) configuré pour communiquer avec le dispositif de commande de fer à souder (100) au moyen d'un réseau (NW),
dans lequel
le dispositif de commande de fer à souder (100) comporte une unité de communication (102) configurée pour transmettre le résultat d'étalonnage stocké dans l'unité de stockage au dispositif informatique (400) au moyen du réseau (NW).

**7.** Combinaison selon l'une quelconque des revendications 1 à 3, dans laquelle la cartouche (220) inclut en outre l'unité de stockage, l'unité de stockage étant une mémoire non volatile (224) configurée pour écrire de façon répétée des informations comportant le résultat d'étalonnage.

**8.** Combinaison selon la revendication 1, dans laquelle l'unité de traitement de stockage (112a) amène en outre l'unité de stockage à stocker la température de la panne (221) mesurée par le dispositif de mesure de température (300) pendant l'étalonnage de la température de la panne (221) lorsque le résultat d'étalonnage indique une réussite de l'étalonnage de la température de la panne (221).

FIG.1

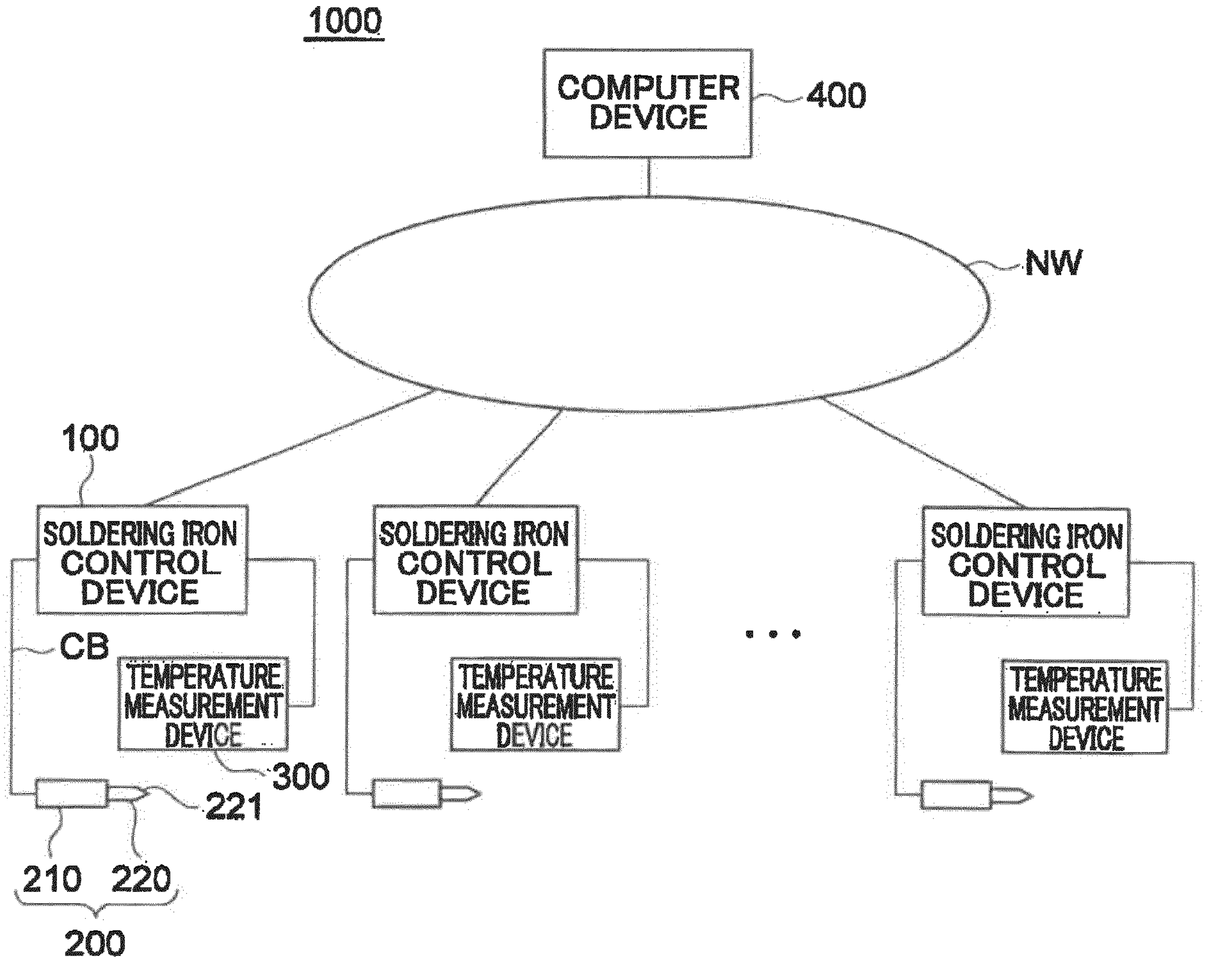
1000
COMPUTER DEVICE
400
NW
100
SOLDERING IRON CONTROL DEVICE
SOLDERING IRON CONTROL DEVICE
SOLDERING IRON CONTROL DEVICE
CB
TEMPERATURE MEASUREMENT DEVICE
TEMPERATURE MEASUREMENT DEVICE
TEMPERATURE MEASUREMENT DEVICE
300
221
210
220
200

FIG.2

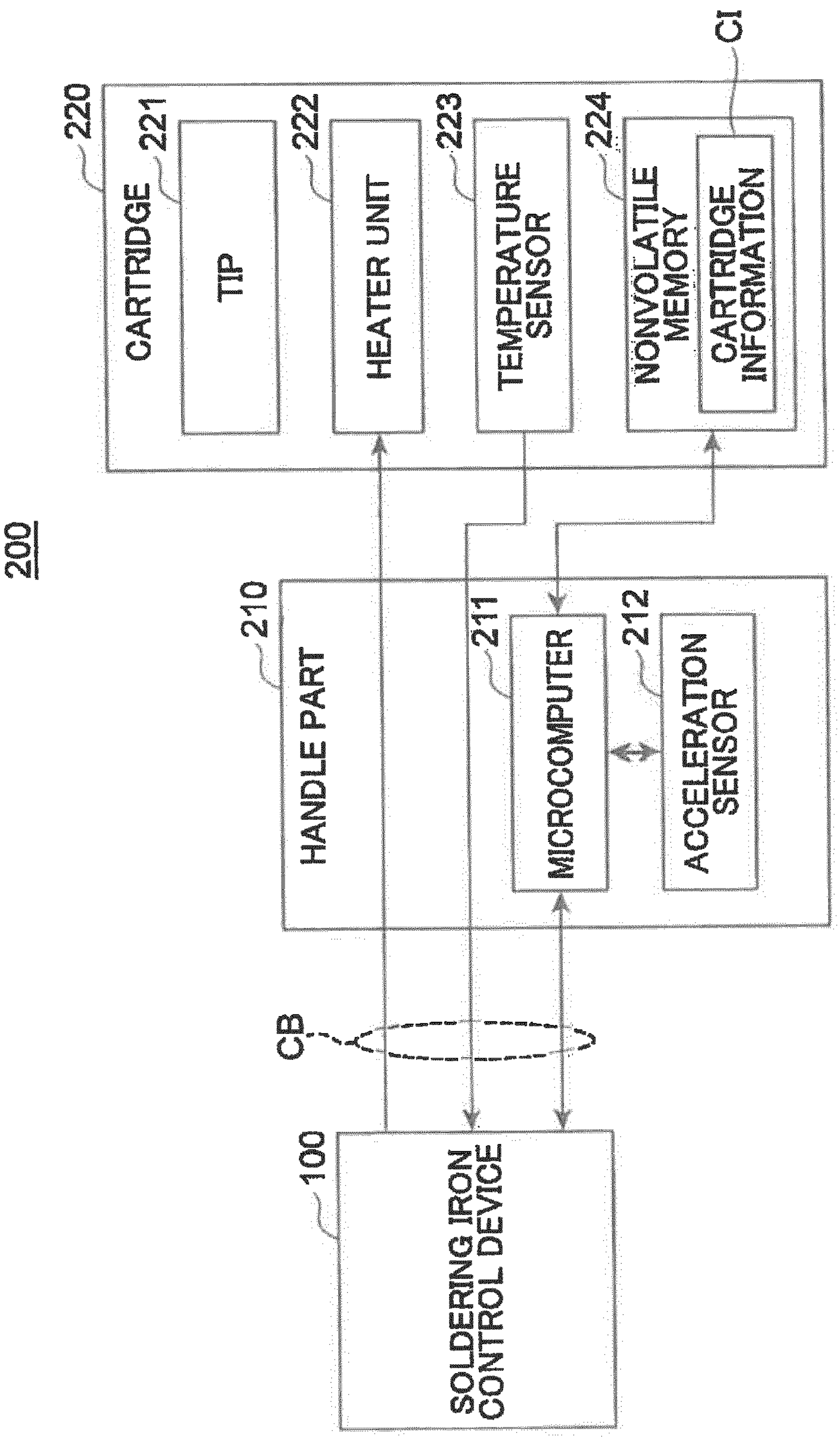
200
220
CARTRIDGE
221
TIP
222
HEATER UNIT
223
TEMPERATURE SENSOR
224
NONVOLATILE MEMORY
CARTRIDGE INFORMATION
CI
210
HANDLE PART
211
MICROCOMPUTER
212
ACCELERATION SENSOR
CB
100
SOLDERING IRON CONTROL DEVICE

FIG.3

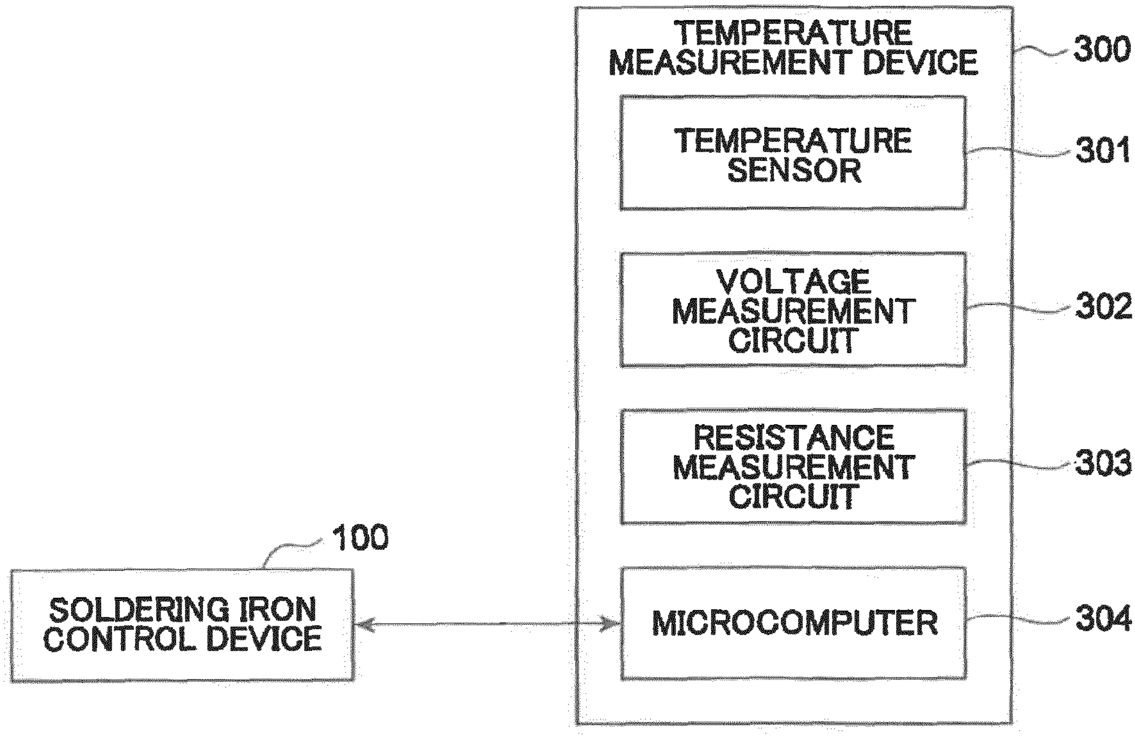
TEMPERATURE MEASUREMENT DEVICE
300
TEMPERATURE SENSOR
301
VOLTAGE MEASUREMENT CIRCUIT
302
RESISTANCE MEASUREMENT CIRCUIT
303
100
SOLDERING IRON CONTROL DEVICE
MICROCOMPUTER
304

FIG.4

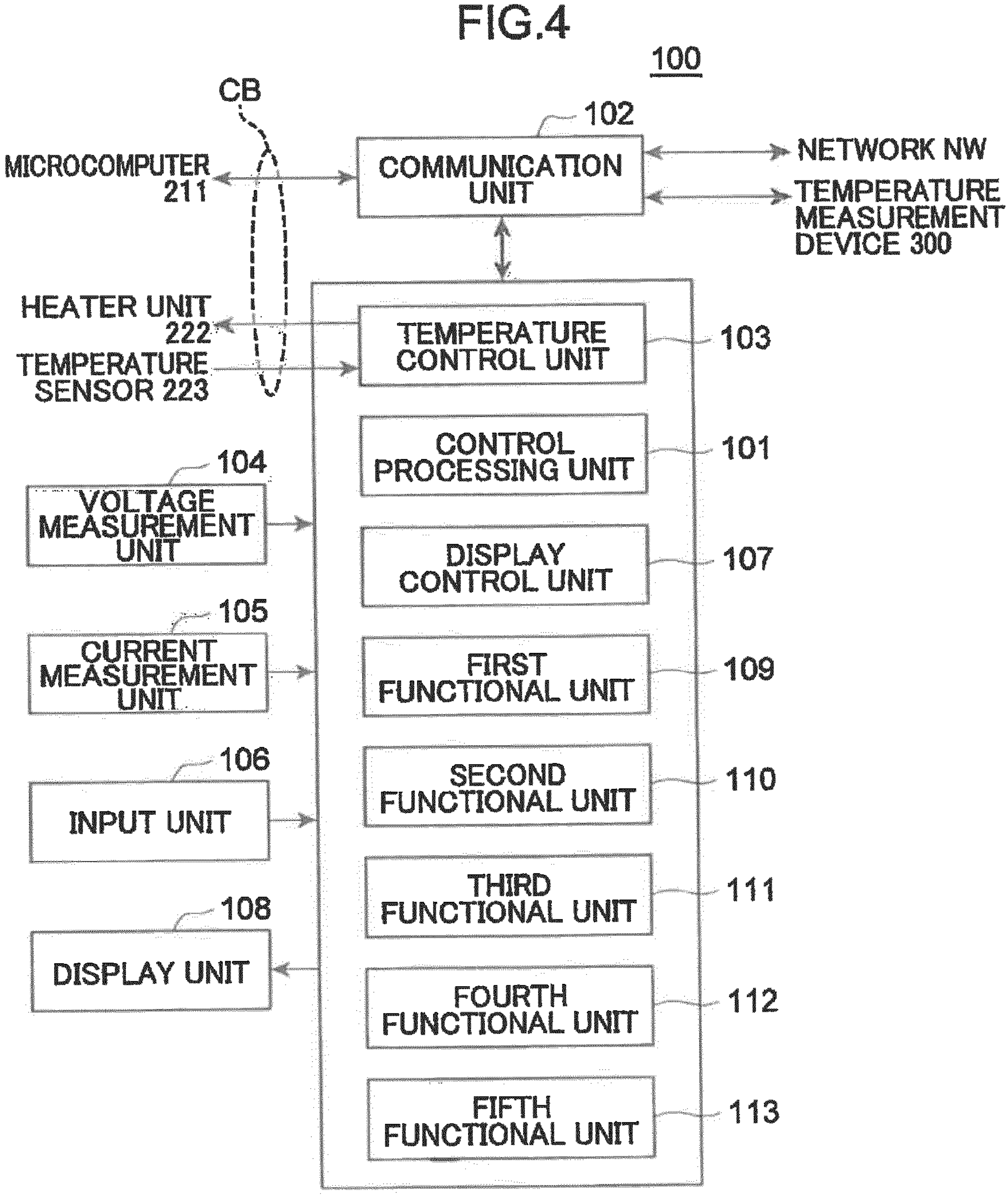
100
CB
102
MICROCOMPUTER 211
COMMUNICATION UNIT
NETWORK NW
TEMPERATURE MEASUREMENT DEVICE 300
HEATER UNIT 222
TEMPERATURE SENSOR 223
TEMPERATURE CONTROL UNIT
103
104
VOLTAGE MEASUREMENT UNIT
CONTROL PROCESSING UNIT
101
DISPLAY CONTROL UNIT
107
105
CURRENT MEASUREMENT UNIT
FIRST FUNCTIONAL UNIT
109
106
INPUT UNIT
SECOND FUNCTIONAL UNIT
110
THIRD FUNCTIONAL UNIT
111
108
DISPLAY UNIT
FOURTH FUNCTIONAL UNIT
112
FIFTH FUNCTIONAL UNIT
113

FIG.5

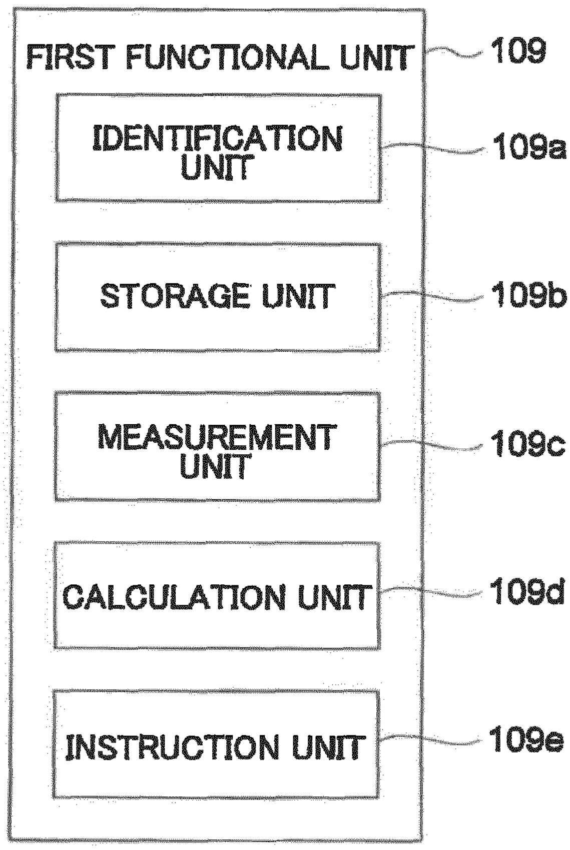
FIRST FUNCTIONAL UNIT
109
IDENTIFICATION UNIT
109a
STORAGE UNIT
109b
MEASUREMENT UNIT
109c
CALCULATION UNIT
109d
INSTRUCTION UNIT
109e

FIG.6

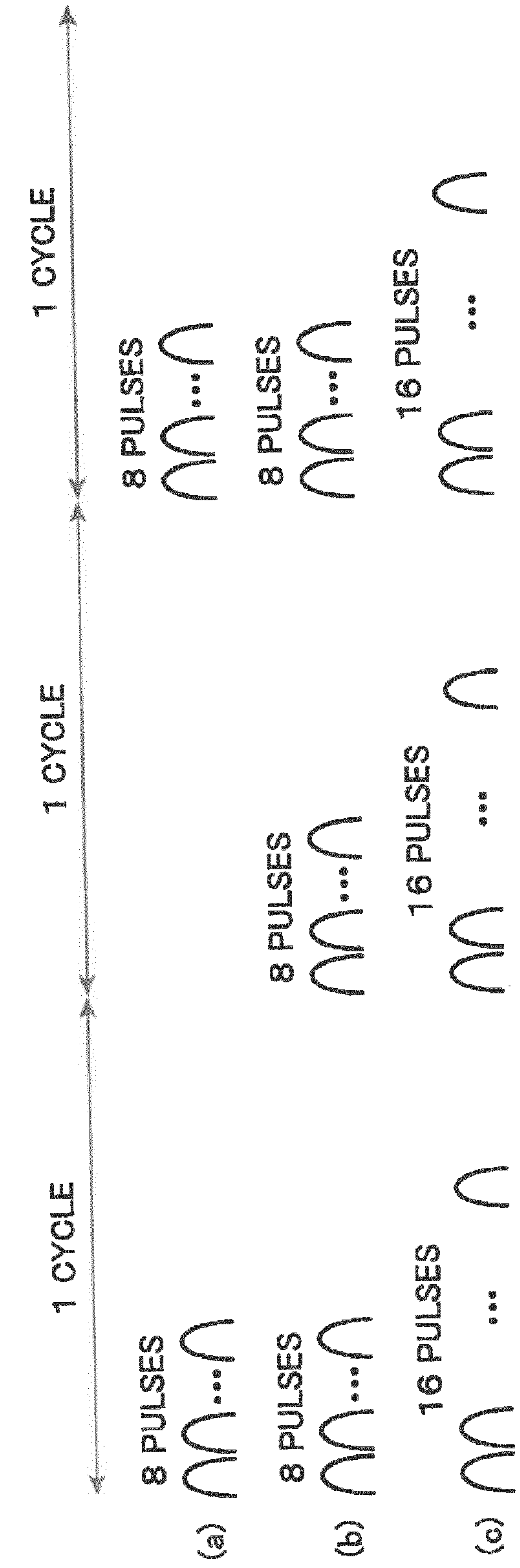
1 CYCLE
1 CYCLE
1 CYCLE
(a)
8 PULSES
8 PULSES
(b)
8 PULSES
8 PULSES
8 PULSES
(c)
16 PULSES
16 PULSES
16 PULSES

FIG.7

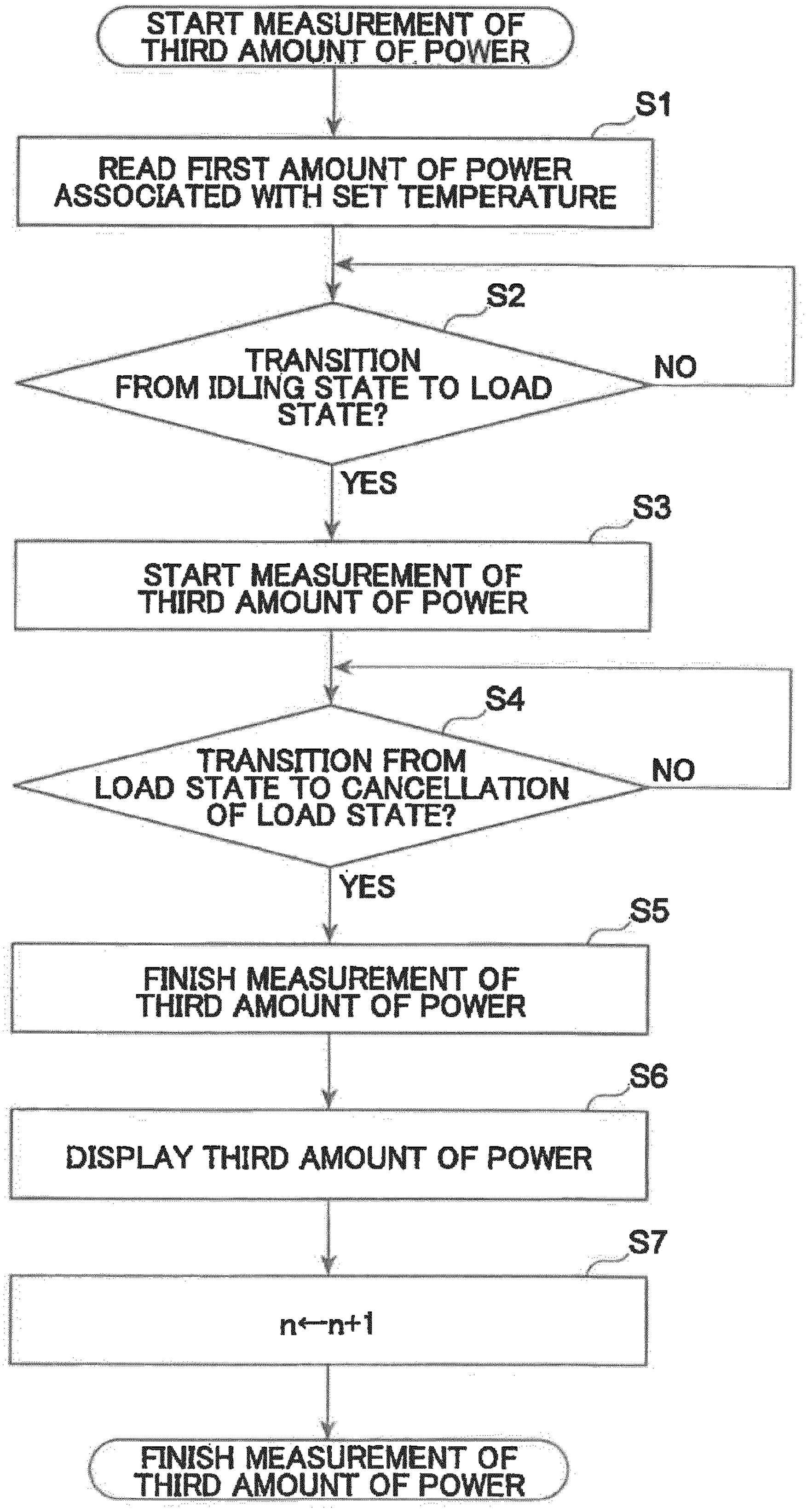
START MEASUREMENT OF THIRD AMOUNT OF POWER
S1
READ FIRST AMOUNT OF POWER ASSOCIATED WITH SET TEMPERATURE
S2
TRANSITION FROM IDLING STATE TO LOAD STATE?
NO
YES
S3
START MEASUREMENT OF THIRD AMOUNT OF POWER
S4
TRANSITION FROM LOAD STATE TO CANCELLATION OF LOAD STATE?
NO
YES
S5
FINISH MEASUREMENT OF THIRD AMOUNT OF POWER
S6
DISPLAY THIRD AMOUNT OF POWER
S7
n←n+1
FINISH MEASUREMENT OF THIRD AMOUNT OF POWER

FIG.8

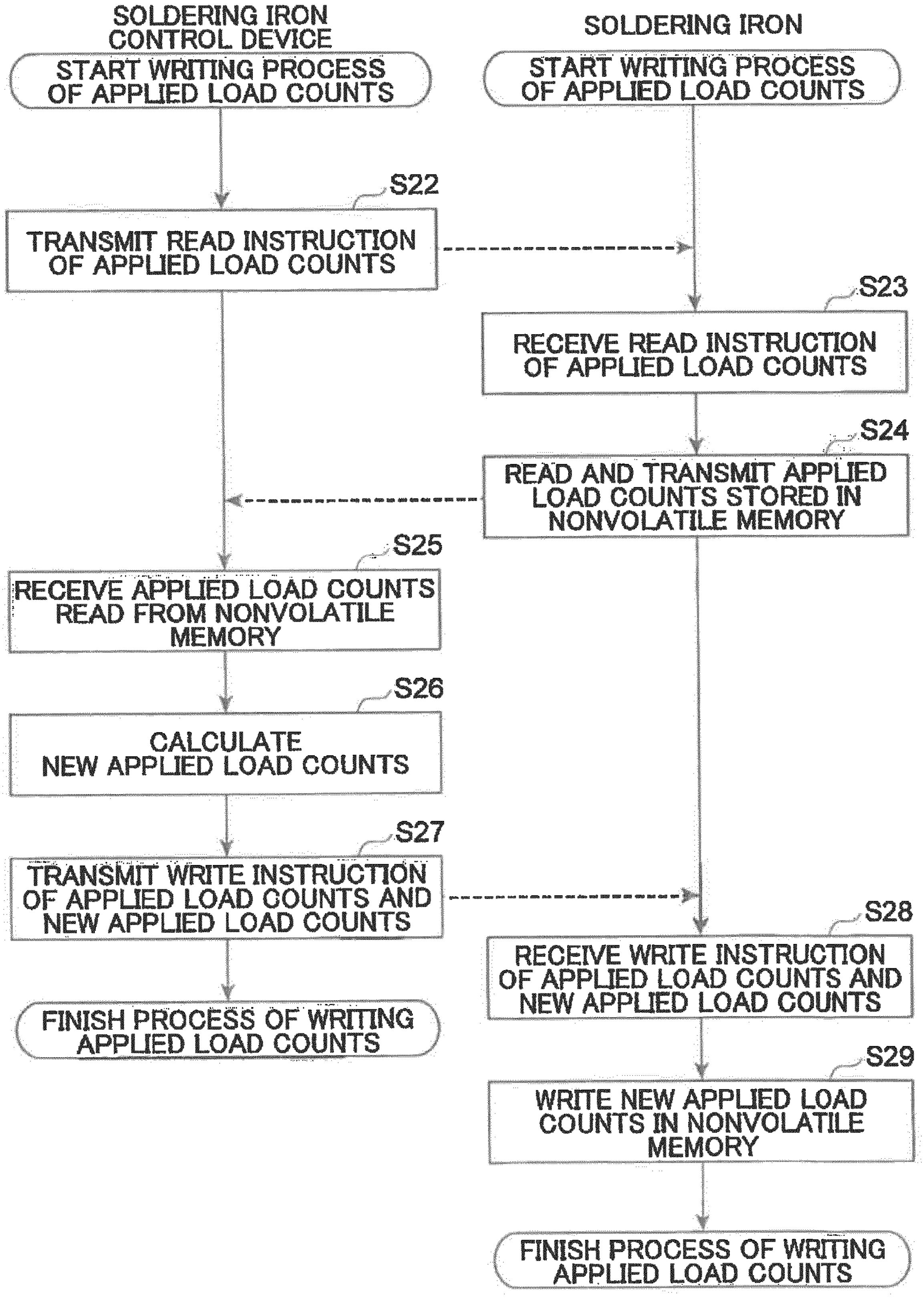
SOLDERING IRON CONTROL DEVICE
SOLDERING IRON
START WRITING PROCESS OF APPLIED LOAD COUNTS
START WRITING PROCESS OF APPLIED LOAD COUNTS
S22
TRANSMIT READ INSTRUCTION OF APPLIED LOAD COUNTS
S23
RECEIVE READ INSTRUCTION OF APPLIED LOAD COUNTS
S24
READ AND TRANSMIT APPLIED LOAD COUNTS STORED IN NONVOLATILE MEMORY
S25
RECEIVE APPLIED LOAD COUNTS READ FROM NONVOLATILE MEMORY
S26
CALCULATE NEW APPLIED LOAD COUNTS
S27
TRANSMIT WRITE INSTRUCTION OF APPLIED LOAD COUNTS AND NEW APPLIED LOAD COUNTS
S28
RECEIVE WRITE INSTRUCTION OF APPLIED LOAD COUNTS AND NEW APPLIED LOAD COUNTS
FINISH PROCESS OF WRITING APPLIED LOAD COUNTS
S29
WRITE NEW APPLIED LOAD COUNTS IN NONVOLATILE MEMORY
FINISH PROCESS OF WRITING APPLIED LOAD COUNTS

FIG.9

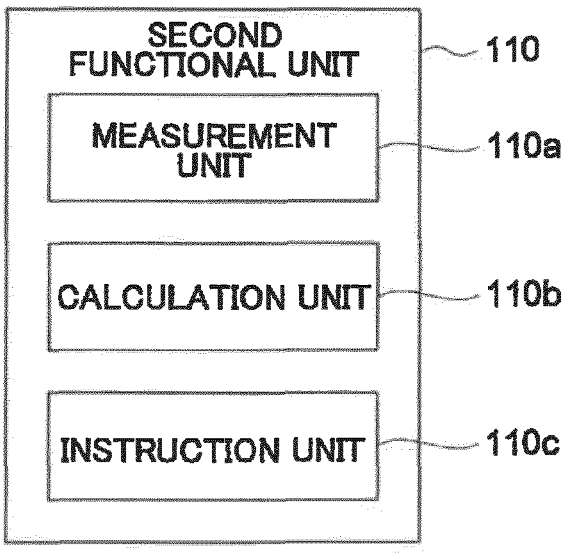
SECOND FUNCTIONAL UNIT
110
MEASUREMENT UNIT
110a
CALCULATION UNIT
110b
INSTRUCTION UNIT
110c

FIG.10

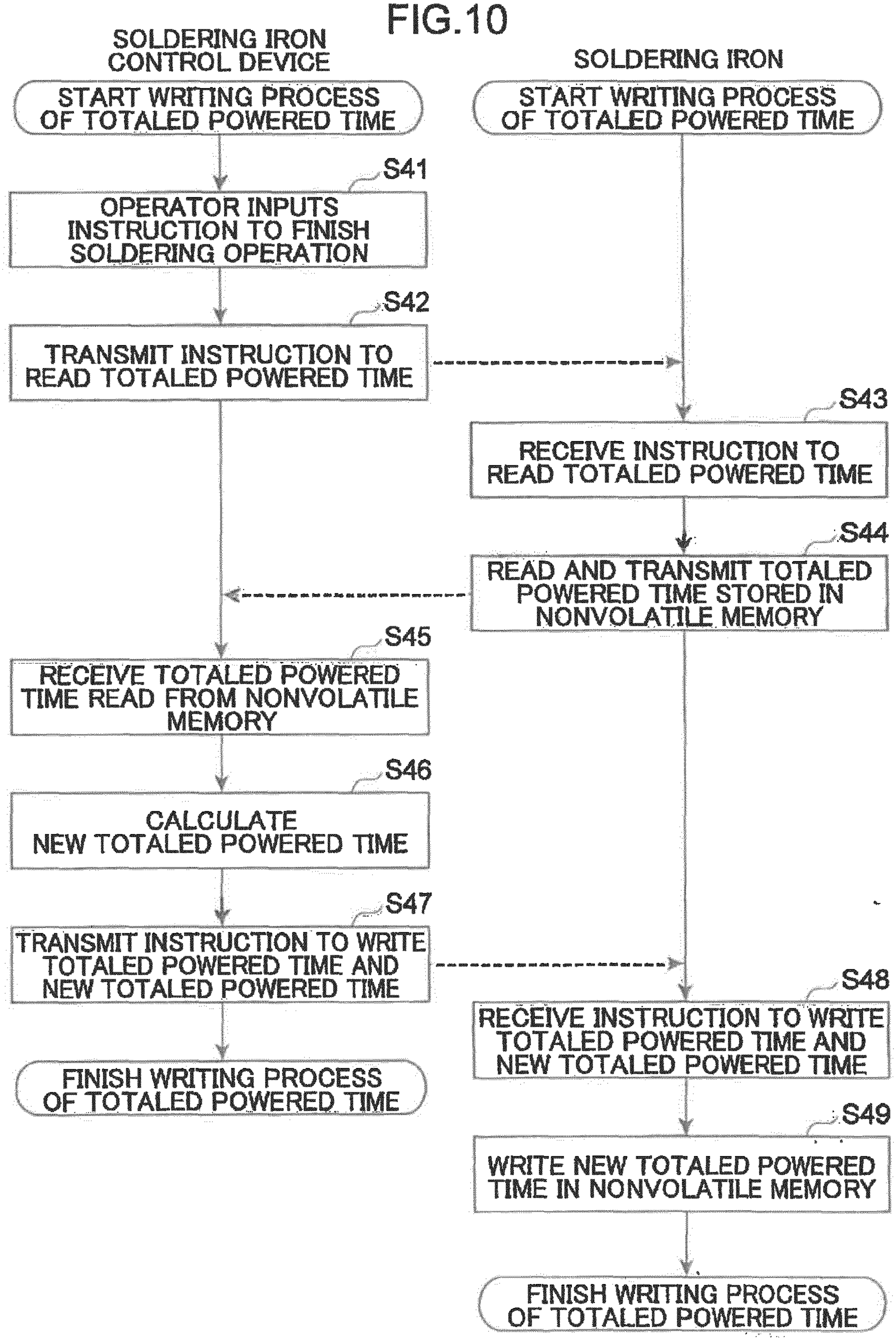
SOLDERING IRON CONTROL DEVICE
SOLDERING IRON
START WRITING PROCESS OF TOTALED POWERED TIME
START WRITING PROCESS OF TOTALED POWERED TIME
S41
OPERATOR INPUTS INSTRUCTION TO FINISH SOLDERING OPERATION
S42
TRANSMIT INSTRUCTION TO READ TOTALED POWERED TIME
S43
RECEIVE INSTRUCTION TO READ TOTALED POWERED TIME
S44
READ AND TRANSMIT TOTALED POWERED TIME STORED IN NONVOLATILE MEMORY
S45
RECEIVE TOTALED POWERED TIME READ FROM NONVOLATILE MEMORY
S46
CALCULATE NEW TOTALED POWERED TIME
S47
TRANSMIT INSTRUCTION TO WRITE TOTALED POWERED TIME AND NEW TOTALED POWERED TIME
S48
RECEIVE INSTRUCTION TO WRITE TOTALED POWERED TIME AND NEW TOTALED POWERED TIME
FINISH WRITING PROCESS OF TOTALED POWERED TIME
S49
WRITE NEW TOTALED POWERED TIME IN NONVOLATILE MEMORY
FINISH WRITING PROCESS OF TOTALED POWERED TIME

FIG.11

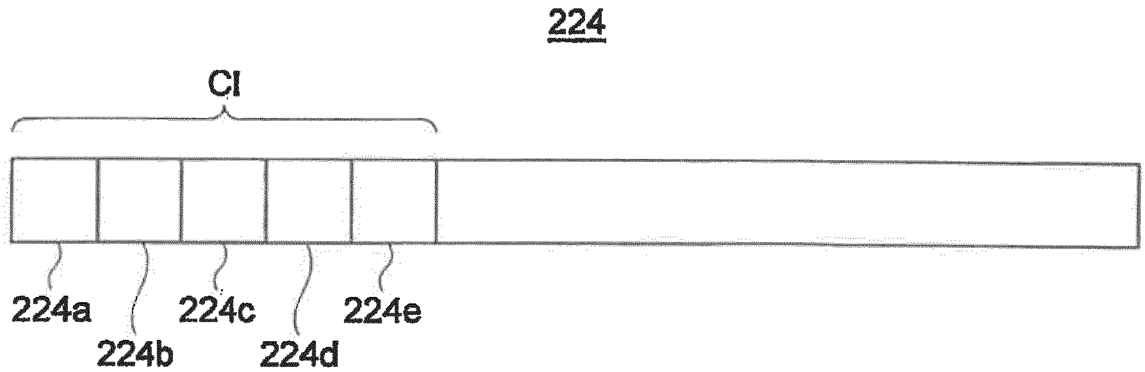

FIG.12

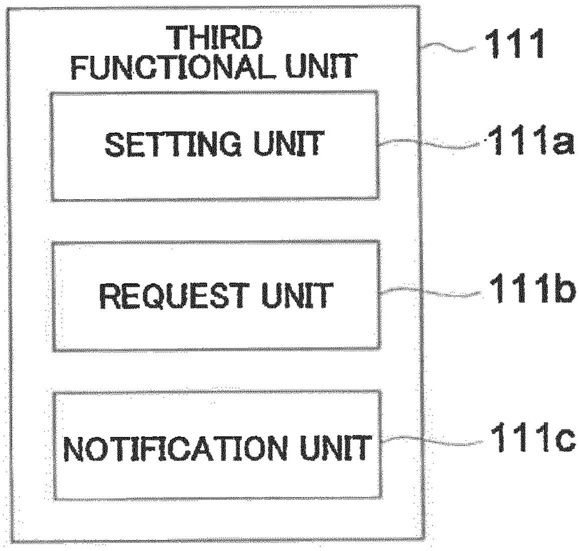
THIRD
FUNCTIONAL UNIT
111
SETTING UNIT
111a
REQUEST UNIT
111b
NOTIFICATION UNIT
111c

FIG.13

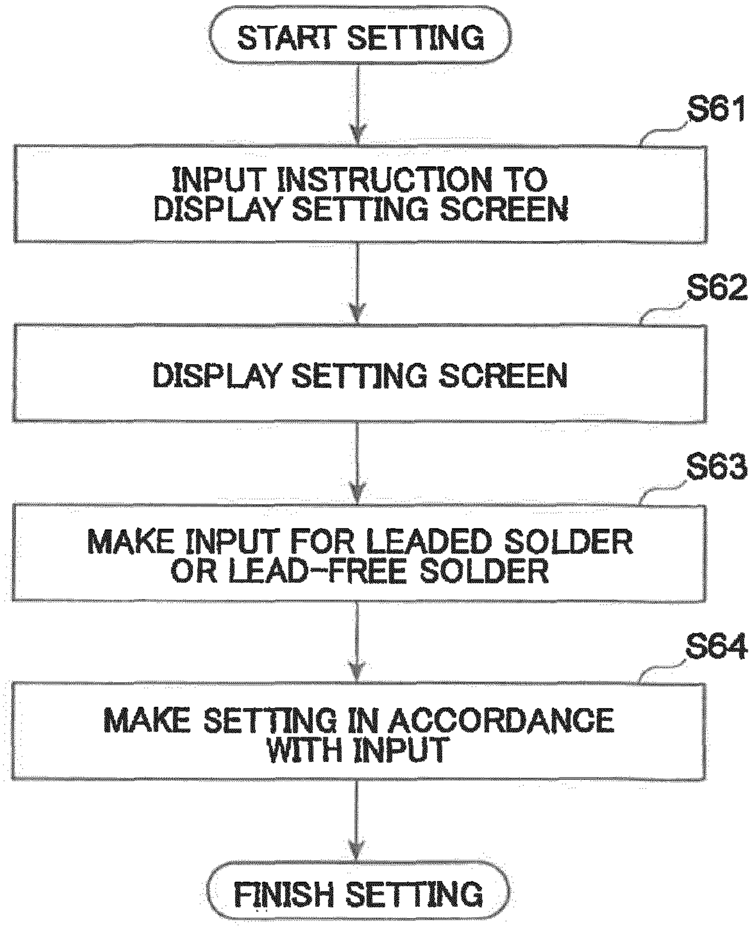
START SETTING
S61
INPUT INSTRUCTION TO DISPLAY SETTING SCREEN
S62
DISPLAY SETTING SCREEN
S63
MAKE INPUT FOR LEADED SOLDER OR LEAD-FREE SOLDER
S64
MAKE SETTING IN ACCORDANCE WITH INPUT
FINISH SETTING

FIG.14

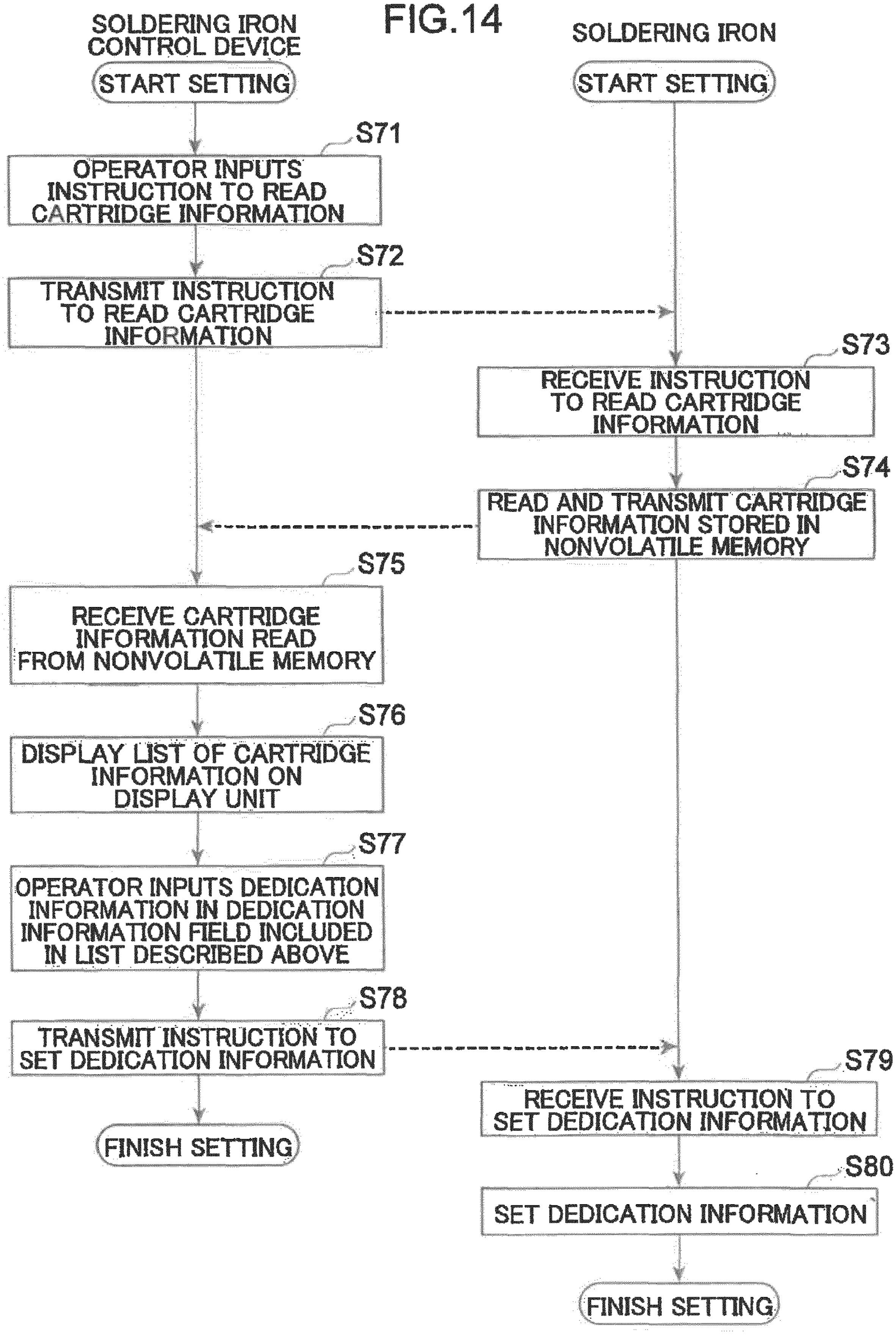
SOLDERING IRON CONTROL DEVICE
SOLDERING IRON
START SETTING
S71
OPERATOR INPUTS INSTRUCTION TO READ CARTRIDGE INFORMATION
S72
TRANSMIT INSTRUCTION TO READ CARTRIDGE INFORMATION
START SETTING
S73
RECEIVE INSTRUCTION TO READ CARTRIDGE INFORMATION
S74
READ AND TRANSMIT CARTRIDGE INFORMATION STORED IN NONVOLATILE MEMORY
S75
RECEIVE CARTRIDGE INFORMATION READ FROM NONVOLATILE MEMORY
S76
DISPLAY LIST OF CARTRIDGE INFORMATION ON DISPLAY UNIT
S77
OPERATOR INPUTS DEDICATION INFORMATION IN DEDICATION INFORMATION FIELD INCLUDED IN LIST DESCRIBED ABOVE
S78
TRANSMIT INSTRUCTION TO SET DEDICATION INFORMATION
FINISH SETTING
S79
RECEIVE INSTRUCTION TO SET DEDICATION INFORMATION
S80
SET DEDICATION INFORMATION
FINISH SETTING

FIG.15

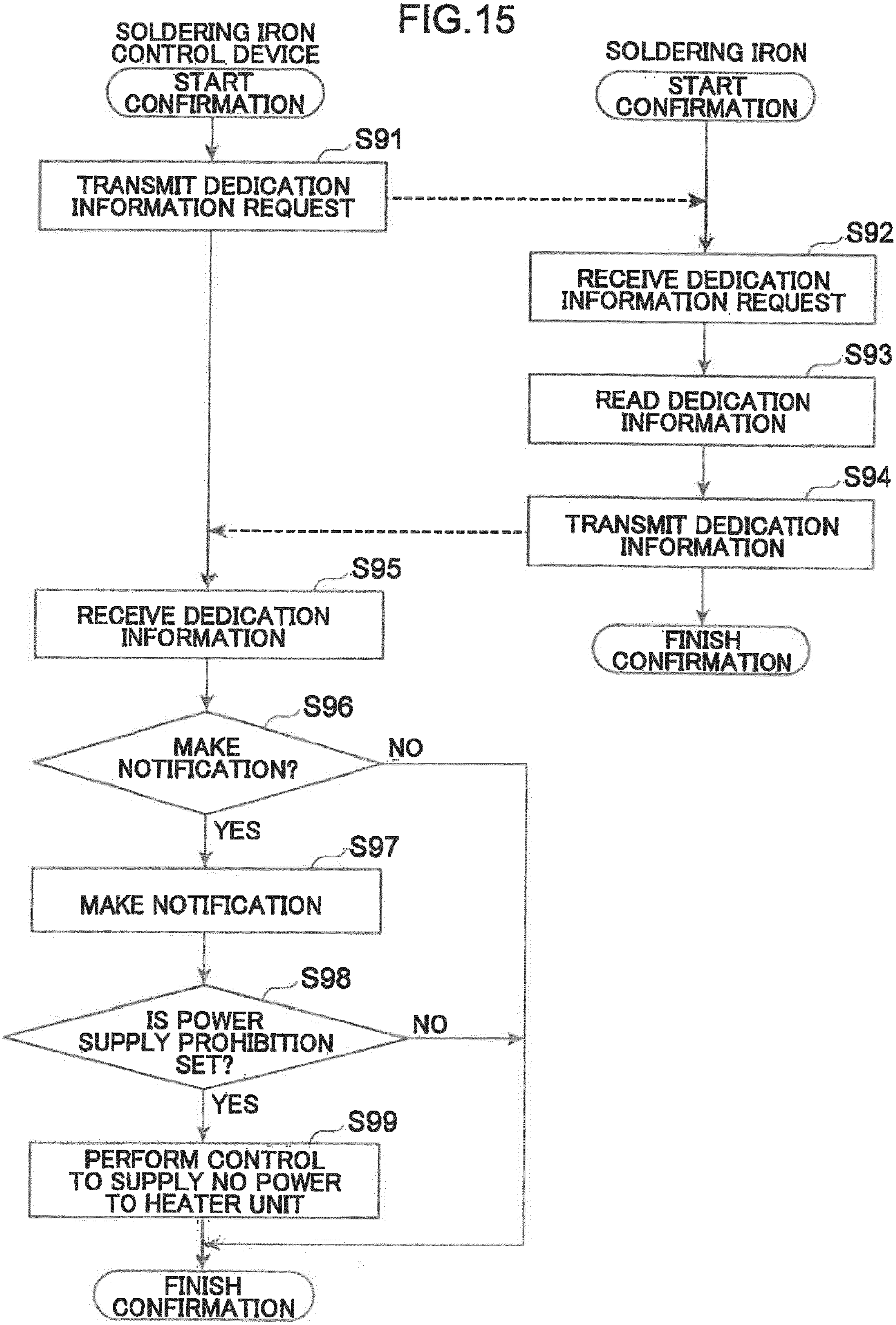
SOLDERING IRON CONTROL DEVICE
START CONFIRMATION
S91
TRANSMIT DEDICATION INFORMATION REQUEST
SOLDERING IRON
START CONFIRMATION
S92
RECEIVE DEDICATION INFORMATION REQUEST
S93
READ DEDICATION INFORMATION
S94
TRANSMIT DEDICATION INFORMATION
FINISH CONFIRMATION
S95
RECEIVE DEDICATION INFORMATION
S96
MAKE NOTIFICATION?
NO
YES
S97
MAKE NOTIFICATION
S98
IS POWER SUPPLY PROHIBITION SET?
NO
YES
S99
PERFORM CONTROL TO SUPPLY NO POWER TO HEATER UNIT
FINISH CONFIRMATION

FIG.16

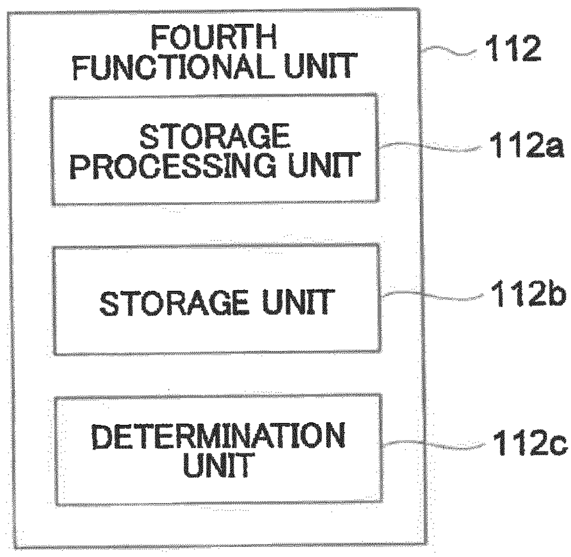
FOURTH FUNCTIONAL UNIT
112
STORAGE PROCESSING UNIT
112a
STORAGE UNIT
112b
DETERMINATION UNIT
112c

FIG.17

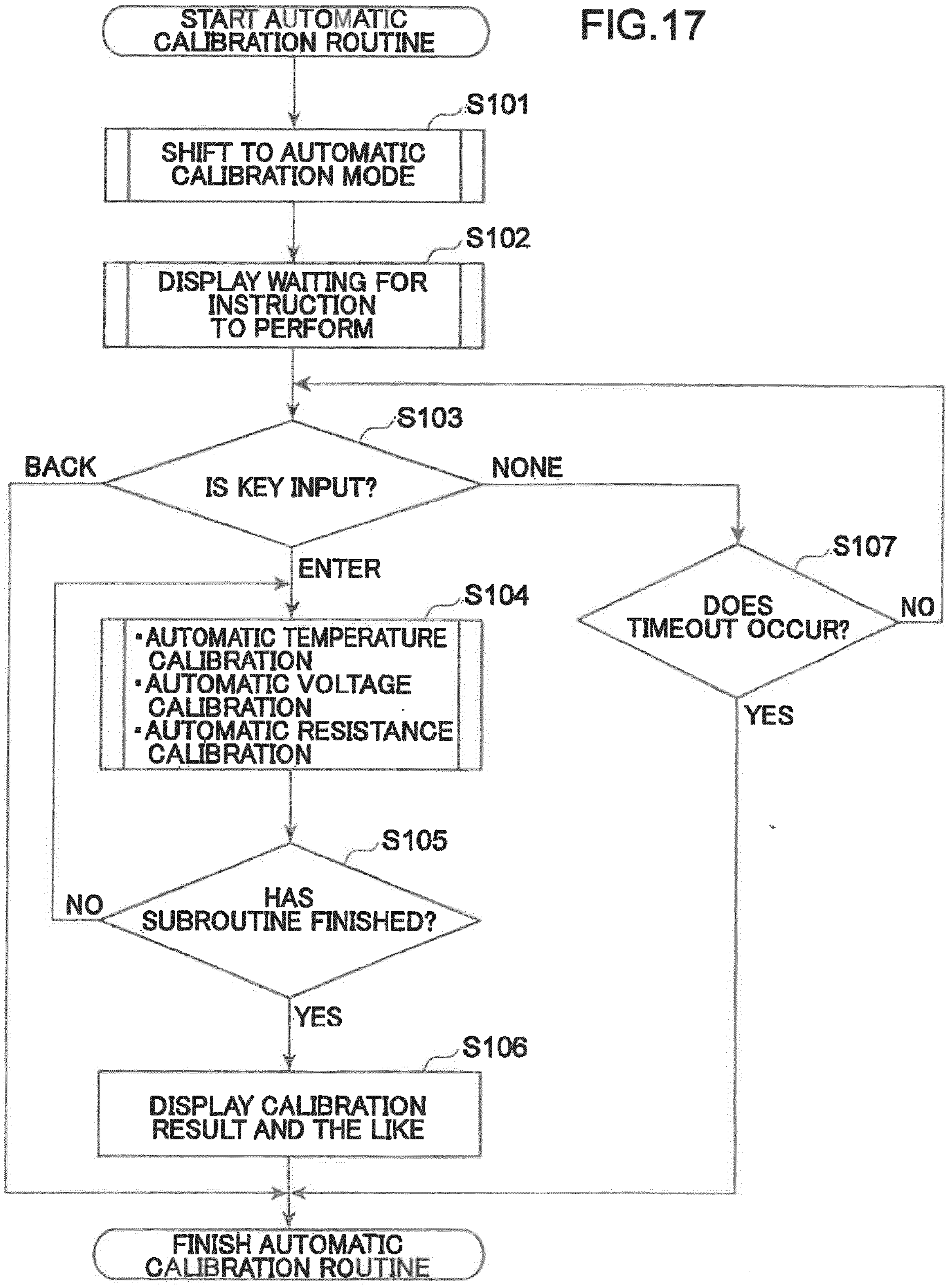
START AUTOMATIC CALIBRATION ROUTINE
S101
SHIFT TO AUTOMATIC CALIBRATION MODE
S102
DISPLAY WAITING FOR INSTRUCTION TO PERFORM
S103
IS KEY INPUT?
BACK
NONE
ENTER
S104
▪AUTOMATIC TEMPERATURE CALIBRATION
▪AUTOMATIC VOLTAGE CALIBRATION
▪AUTOMATIC RESISTANCE CALIBRATION
S105
HAS SUBROUTINE FINISHED?
NO
YES
S106
DISPLAY CALIBRATION RESULT AND THE LIKE
S107
DOES TIMEOUT OCCUR?
NO
YES
FINISH AUTOMATIC CALIBRATION ROUTINE

FIG.18A

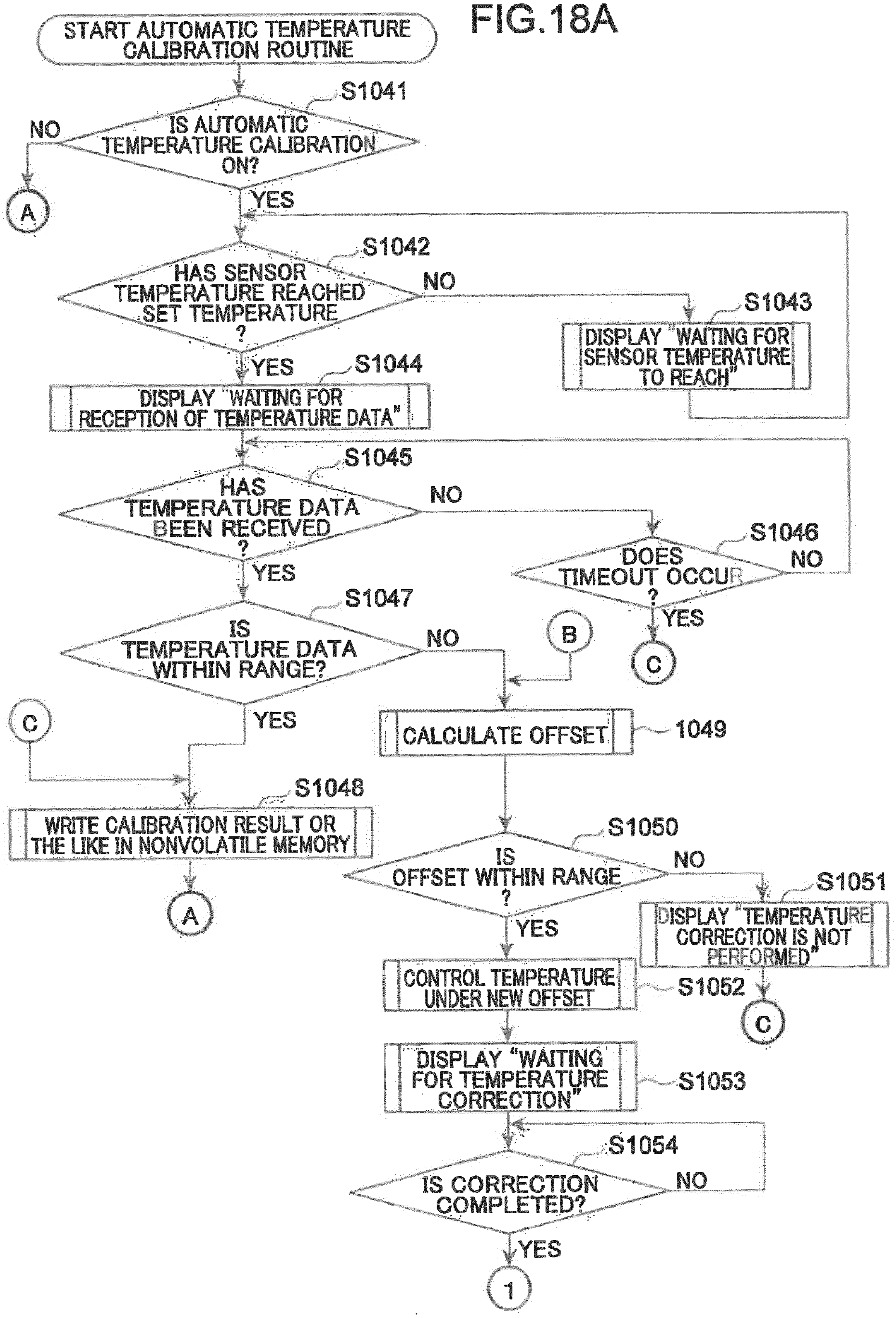
START AUTOMATIC TEMPERATURE CALIBRATION ROUTINE
S1041
IS AUTOMATIC TEMPERATURE CALIBRATION ON?
NO
A
YES
S1042
HAS SENSOR TEMPERATURE REACHED SET TEMPERATURE ?
NO
S1043
DISPLAY "WAITING FOR SENSOR TEMPERATURE TO REACH"
YES
S1044
DISPLAY "WAITING FOR RECEPTION OF TEMPERATURE DATA"
S1045
HAS TEMPERATURE DATA BEEN RECEIVED ?
NO
S1046
DOES TIMEOUT OCCUR ?
NO
YES
C
YES
S1047
IS TEMPERATURE DATA WITHIN RANGE?
NO
B
YES
C
CALCULATE OFFSET
1049
S1048
WRITE CALIBRATION RESULT OR THE LIKE IN NONVOLATILE MEMORY
A
S1050
IS OFFSET WITHIN RANGE ?
NO
S1051
DISPLAY "TEMPERATURE CORRECTION IS NOT PERFORMED"
YES
CONTROL TEMPERATURE UNDER NEW OFFSET
S1052
C
DISPLAY "WAITING FOR TEMPERATURE CORRECTION"
S1053
S1054
IS CORRECTION COMPLETED?
NO
YES
1

FIG.18B

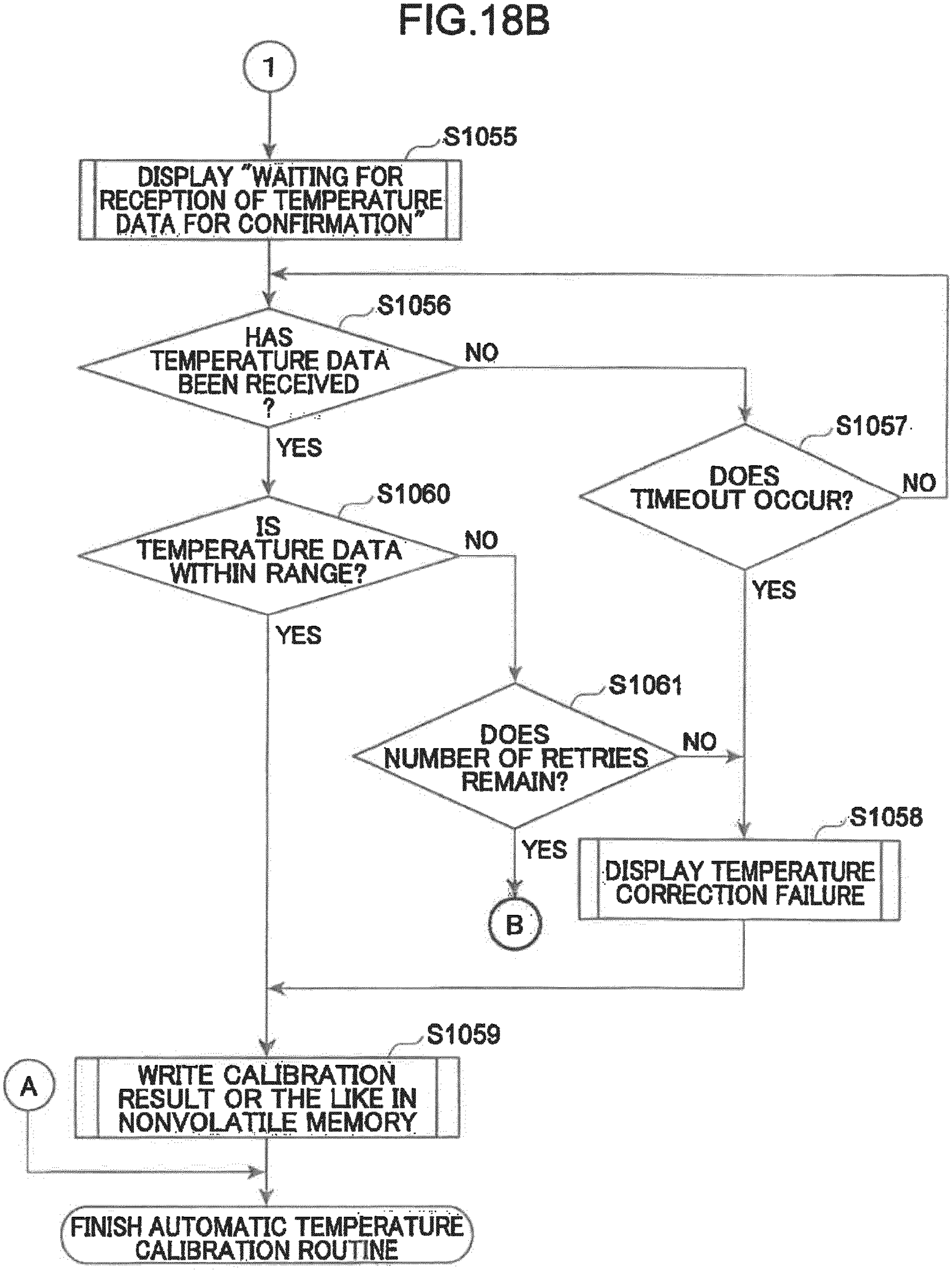
1
S1055
DISPLAY "WAITING FOR RECEPTION OF TEMPERATURE DATA FOR CONFIRMATION"
S1056
HAS TEMPERATURE DATA BEEN RECEIVED ?
NO
YES
S1057
DOES TIMEOUT OCCUR?
NO
YES
S1060
IS TEMPERATURE DATA WITHIN RANGE?
NO
YES
S1061
DOES NUMBER OF RETRIES REMAIN?
NO
YES
B
S1058
DISPLAY TEMPERATURE CORRECTION FAILURE
S1059
A
WRITE CALIBRATION RESULT OR THE LIKE IN NONVOLATILE MEMORY
FINISH AUTOMATIC TEMPERATURE CALIBRATION ROUTINE

FIG.19

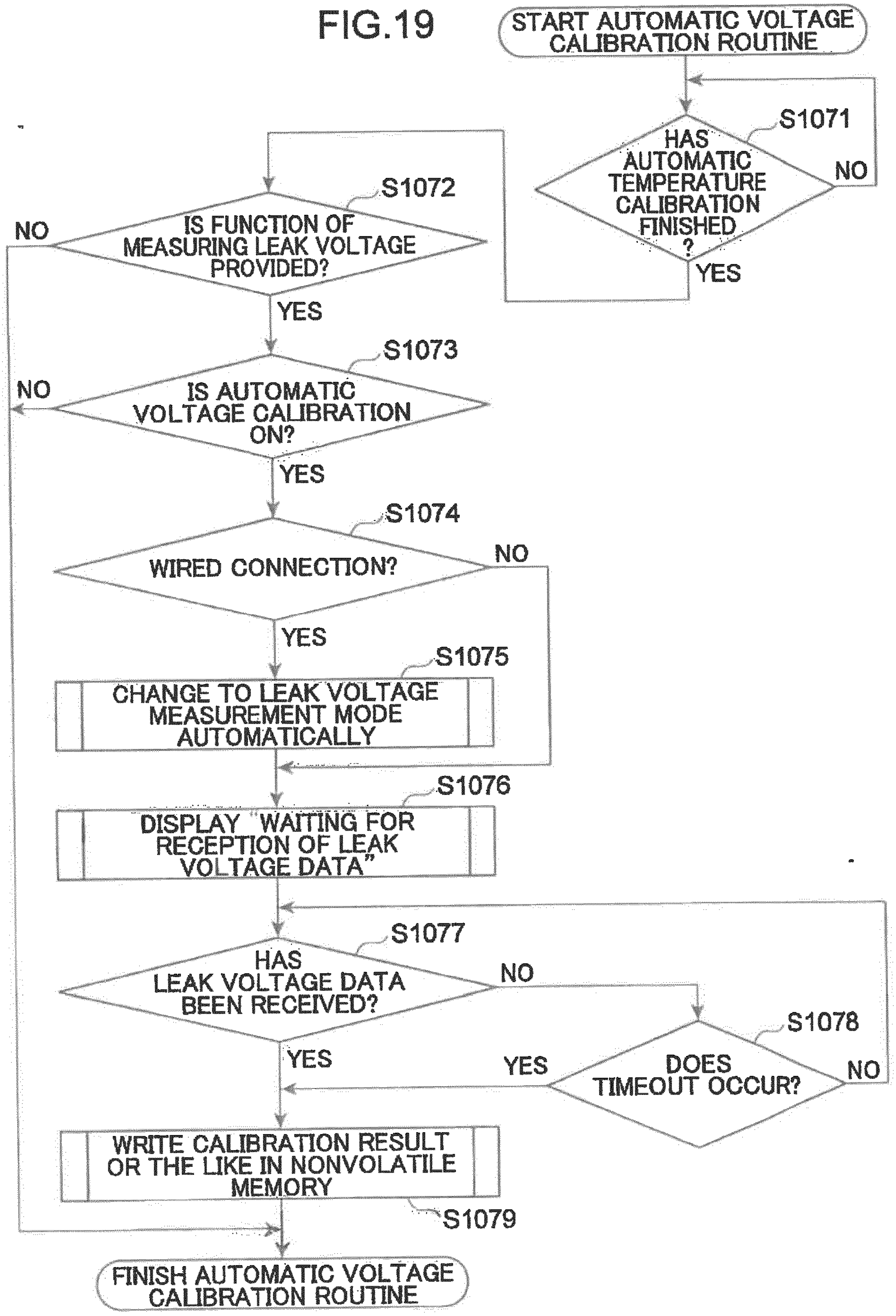
START AUTOMATIC VOLTAGE CALIBRATION ROUTINE
S1071
HAS AUTOMATIC TEMPERATURE CALIBRATION FINISHED ?
NO
YES
S1072
IS FUNCTION OF MEASURING LEAK VOLTAGE PROVIDED?
NO
YES
S1073
IS AUTOMATIC VOLTAGE CALIBRATION ON?
NO
YES
S1074
WIRED CONNECTION?
NO
YES
S1075
CHANGE TO LEAK VOLTAGE MEASUREMENT MODE AUTOMATICALLY
S1076
DISPLAY "WAITING FOR RECEPTION OF LEAK VOLTAGE DATA"
S1077
HAS LEAK VOLTAGE DATA BEEN RECEIVED?
NO
YES
S1078
DOES TIMEOUT OCCUR?
YES
NO
WRITE CALIBRATION RESULT OR THE LIKE IN NONVOLATILE MEMORY
S1079
FINISH AUTOMATIC VOLTAGE CALIBRATION ROUTINE

FIG.20

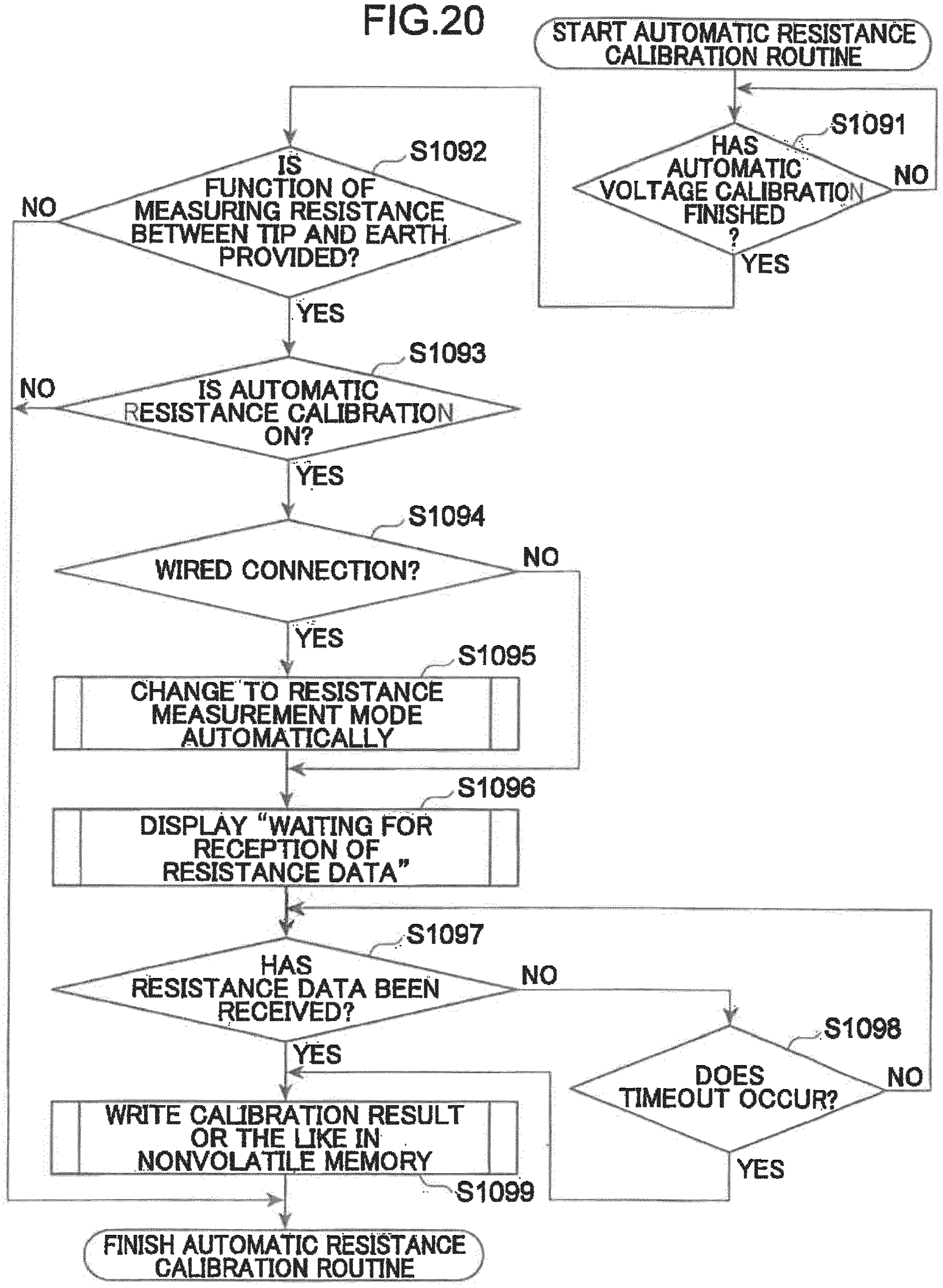
START AUTOMATIC RESISTANCE CALIBRATION ROUTINE
S1091
HAS AUTOMATIC VOLTAGE CALIBRATION FINISHED ?
NO
YES
S1092
IS FUNCTION OF MEASURING RESISTANCE BETWEEN TIP AND EARTH PROVIDED?
NO
YES
S1093
IS AUTOMATIC RESISTANCE CALIBRATION ON?
NO
YES
S1094
WIRED CONNECTION?
NO
YES
S1095
CHANGE TO RESISTANCE MEASUREMENT MODE AUTOMATICALLY
S1096
DISPLAY "WAITING FOR RECEPTION OF RESISTANCE DATA"
S1097
HAS RESISTANCE DATA BEEN RECEIVED?
NO
YES
S1098
DOES TIMEOUT OCCUR?
NO
YES
WRITE CALIBRATION RESULT OR THE LIKE IN NONVOLATILE MEMORY
S1099
FINISH AUTOMATIC RESISTANCE CALIBRATION ROUTINE

FIG.21

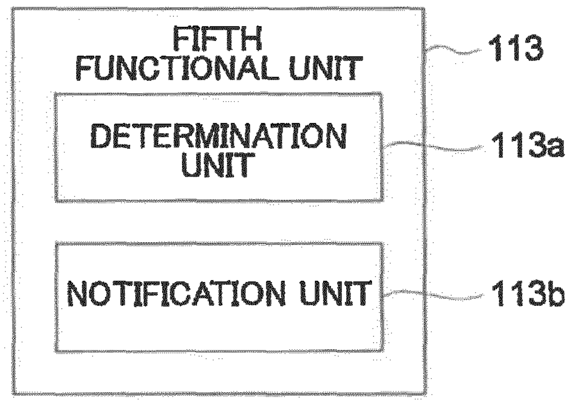
FIFTH
FUNCTIONAL UNIT
113
DETERMINATION
UNIT
113a
NOTIFICATION UNIT
113b

FIG.22

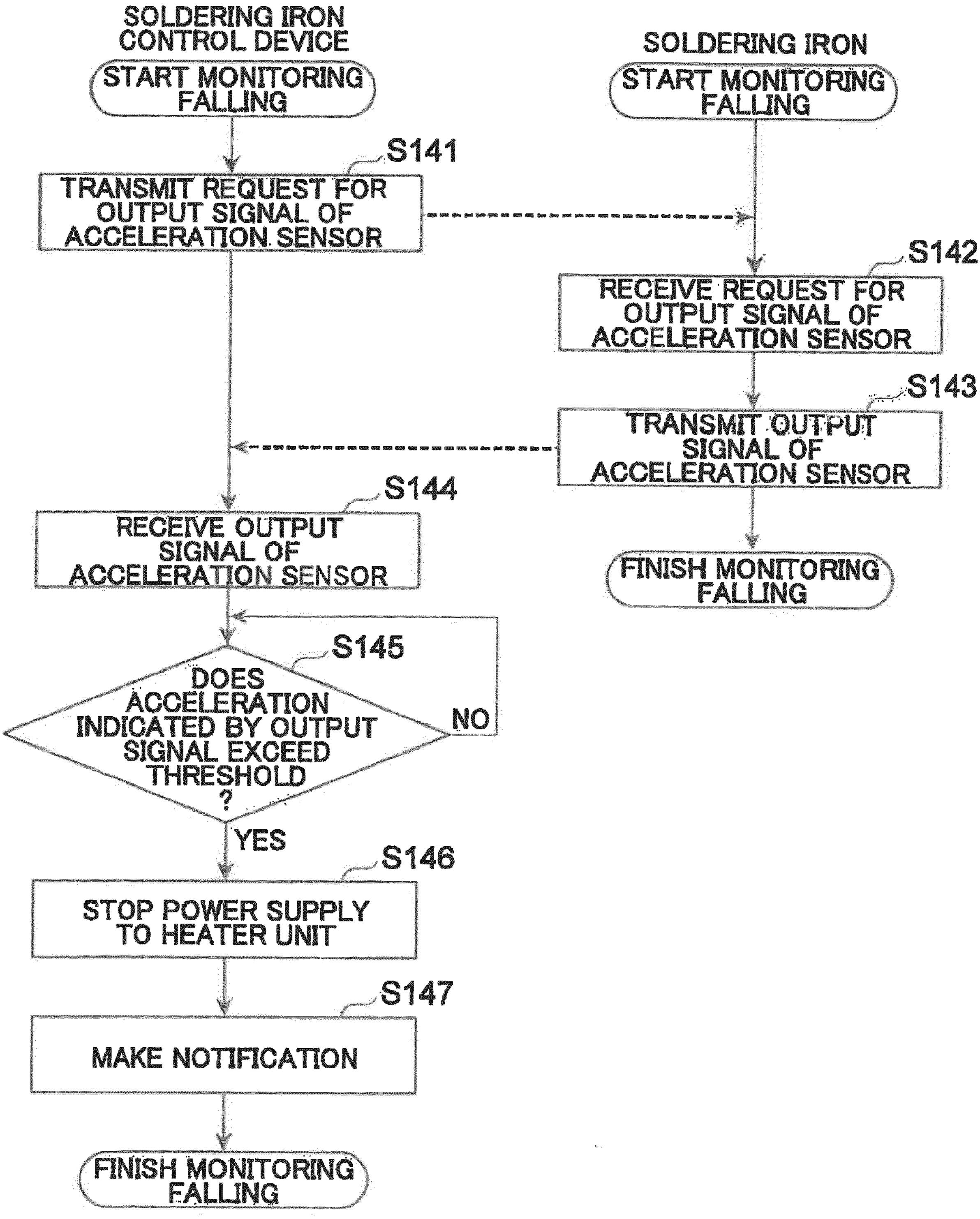
SOLDERING IRON CONTROL DEVICE
SOLDERING IRON
START MONITORING FALLING
START MONITORING FALLING
S141
TRANSMIT REQUEST FOR OUTPUT SIGNAL OF ACCELERATION SENSOR
S142
RECEIVE REQUEST FOR OUTPUT SIGNAL OF ACCELERATION SENSOR
S143
TRANSMIT OUTPUT SIGNAL OF ACCELERATION SENSOR
FINISH MONITORING FALLING
S144
RECEIVE OUTPUT SIGNAL OF ACCELERATION SENSOR
S145
DOES ACCELERATION INDICATED BY OUTPUT SIGNAL EXCEED THRESHOLD ?
NO
YES
S146
STOP POWER SUPPLY TO HEATER UNIT
S147
MAKE NOTIFICATION
FINISH MONITORING FALLING

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6580050 B1